# EUROPEAN PATENT APPLICATION

(11) **EP 4 657 166 A1**
(43) Date of publication of application: **03.12.2025**
(21) Application number: 25175654.0
(22) Date of filing: 12.05.2025
(51) Int. Cl.: G03G 15/00

(54) **IMAGE FORMING SYSTEM, CONTROL METHOD FOR CONTROLLING IMAGE FORMING SYSTEM, AND STORAGE MEDIUM**

(30) Priority: 27.05.2024 JP 2024085523
(71) Applicant: CANON KABUSHIKI KAISHA, Tokyo 146-8501 (JP)
(72) Inventor: IIDA, Toshihiko, Tokyo, 146-8501 (JP)
(74) Representative: Canon Europe Limited

(57) **Abstract**

An image forming system includes a light-emitting section provided at a position visible from outside an image forming apparatus, a display section, and a control unit configured to control light emission by the light-emitting section and display by the display section based on a result of detecting a state of the image forming apparatus by a detection section, wherein the light emission by the light-emitting section includes light emission in a form according to the state, wherein the display by the display section includes display of information indicating handling according to the state, and wherein after the light emission by the light-emitting section and the display by the display section are performed, and in a case where the handling is performed, the control unit ends the light emission and the display and performs light emission by a light-emitting section different from the light-emitting section and display by the display section.

## Description

### BACKGROUND OF THE INVENTION

### Field of the Invention

The present disclosure relates to an image forming system, a control method for controlling an image forming system, and a storage medium.

### Description of the Related Art

Japanese Patent Application Laid-Open Publication No. 2021-74935 discusses an image forming apparatus in which a rotary beacon lamp composed of five segments is provided above a stacker portion. Japanese Patent Application Laid-Open Publication No. 2021-74935 discusses a technique for, in a case where an abnormality has occurred in the image forming apparatus, informing a user that an abnormality has occurred as primary information and informing the user of the content of the abnormality that has occurred as secondary information, using the rotary beacon lamp.

However, for example, the technique discussed in Japanese Patent Application Laid-Open Publication No. 2021-74935 informs the user of the occurrence of an abnormality in the image forming apparatus using a single rotary beacon lamp. In this case, for example, it is not easy to cause the user to quickly understand the content of the abnormality in the image forming apparatus by merely conveying the content based on the manner of lighting a plurality of segments of the single rotary beacon lamp. For example, it is not easy to associate the position where the abnormality has occurred in the image forming apparatus with the lighting of the rotary beacon lamp. For example, it is necessary to educate the user about the manner of lighting the rotary beacon lamp. Thus, for example, an increase in the convenience of the image forming apparatus from the above viewpoint is desired.

### SUMMARY OF THE INVENTION

According to a first aspect of the present invention, there is provided an image forming system as specified in claim 1. Optional features may be specified in claims 2 to 14. According to a second aspect of the present invention, there is provided a control method for controlling an image forming apparatus as specified in claim 15. Optional features of the second aspect may be specified in or derivable from claims 2 to 14. According to a third aspect of the present invention, there is provided a computer-readable storage medium as specified in claim 16. Optional features of the third aspect may be specified in or derivable from claims 2 to 14.

Further features of the present invention will become apparent from the following description of embodiments with reference to the attached drawings.

### BRIEF DESCRIPTION OF THE DRAWINGS

Fig. 1 is a diagram illustrating an image forming system.
Fig. 2A is a diagram illustrating a configuration of a digital front end (DFE).
Figs. 2B-1 and 2B-2 are a diagram illustrating a configuration of an image forming apparatus.
Fig. 3A is a diagram illustrating an external configuration of a feeding section.
Fig. 3B is a diagram illustrating an external configuration of an image forming section.
Fig. 3C is a diagram illustrating external configurations of a first fixing section, a second fixing section, a cooling section, and a reverse section.
Fig. 3D is a diagram illustrating an external configuration of a discharge section.
Fig. 4 is a diagram illustrating an internal configuration of an entirety of the image forming apparatus.
Fig. 5 is a flowchart illustrating processing of a print module.
Fig. 6 is a diagram illustrating a management table.
Fig. 7 is a flowchart illustrating internal processing of the image forming apparatus in a case where a notification is received from a print module.
Fig. 8 is a diagram illustrating an error position identifier management table.
Fig. 9 is a flowchart illustrating processing in a case where a notification is received from the image forming apparatus.
Fig. 10 is a flowchart illustrating a first example of processing in a case where an internal notification of an update of a list of error position identifiers is received.
Fig. 11 is a diagram illustrating an at-time-of-start process for an error scenario.
Figs. 12A and 12B are diagrams illustrating a first example of a resolution work procedure screen.
Fig. 13 is a flowchart illustrating processing in a case where an instruction is received from the DFE.
Fig. 14 is a flowchart illustrating internal processing of the image forming apparatus in a case where an instruction is received from a central processing unit (CPU).
Figs. 15A and 15B are diagrams illustrating lighting states of light-emitting informing sections and display contents of a display device.
Fig. 16 is a flowchart illustrating processing in a case where a notification is received from the image forming apparatus.
Fig. 17 is a flowchart illustrating a second example of the processing in a case where the notification of the update of the list of error position identifiers is received.
Figs. 18A, 18B, and 18C are diagrams illustrating a second example of the resolution work procedure screen.
Fig. 19 is a flowchart illustrating processing in a case where an operation on the resolution work procedure screen is received.

### DESCRIPTION OF THE EMBODIMENTS

With reference to the drawings, embodiments of the present invention will be described below.

First, a first embodiment is described.

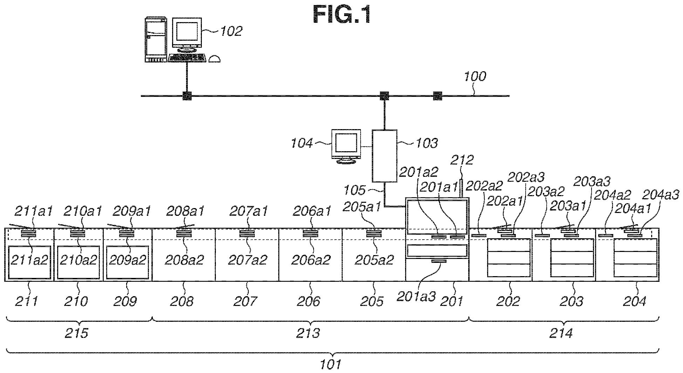

Fig. 1 is a block diagram illustrating an example of an image forming system according to the present embodiment. In the present embodiment, a case is illustrated where an image forming apparatus 101 is a printer using an inkjet method. The image forming apparatus 101 may be a printer using a method other than the inkjet method, such as a printer using an electrophotographic method. The image forming apparatus 101 may be a multifunction peripheral-type printer including a reading apparatus such as a scanner. In the present embodiment, a case is illustrated where an information processing apparatus 102 is a personal computer (PC). The information processing apparatus 102 may be a mobile information terminal such as a smartphone or a tablet terminal. In the present embodiment, a case is illustrated where the image forming apparatus 101 and the information processing apparatus 102 are connected together via a network 100 so that the image forming apparatus 101 and the information processing apparatus 102 can communicate with each other. The communication between the image forming apparatus 101 and the information processing apparatus 102, however, is not limited to communication via the network 100. The communication between the image forming apparatus 101 and the information processing apparatus 102 may be wired communication, or may be wireless communication.

Fig. 1 illustrates a case where a single information processing apparatus 102 is provided in the image forming system. However, for example, the image forming apparatus 101 and a plurality of information processing apparatuses may be connected together via the network 100 so that the image forming apparatus 101 and the plurality of information processing apparatuses can communicate with each other. In the present embodiment, a case is illustrated where the image forming system includes the image forming apparatus 101 and the information processing apparatus 102.

The image forming system, however, is not limited to a system including the image forming apparatus 101 and the information processing apparatus 102. For example, the image forming system may be composed only of the image forming apparatus 101. In an image forming process that can be executed by the image forming apparatus 101 alone, the information processing apparatus 102 connected to the network 100 may not be included in the image forming system. Examples of the image forming process that can be executed by the image forming apparatus 101 alone include the process of printing a job saved in the image forming apparatus 101.

First, an example of the information processing apparatus 102 is described. The information processing apparatus 102 executes various programs such as an application program that submits a print job. On the information processing apparatus 102, various applications such as a printer driver and workflow software are installed. The various applications achieve functions including the conversion of print data into a printer language corresponding to the image forming apparatus 101. A user who wishes to perform printing gives a print instruction by using the various applications. The printer driver and the workflow software perform processing for converting data output from an application based on a print instruction into print data that can be interpreted by the image forming apparatus 101, and transmitting the print data to the image forming apparatus 101 connected to the network 100.

The method for transmitting the print data to the image forming apparatus 101 is not limited. The information processing apparatus 102 may transmit the print data to the image forming apparatus 101 via a printing application or the printer driver, or the information processing apparatus 102 may transmit the print data to the image forming apparatus 101 via a cloud server.

Next, an example of the image forming apparatus 101 is described. The image forming apparatus 101 has a print function for printing an image on a sheet. The image forming apparatus 101 has post-processing functions. For example, the post-processing functions include the function of aligning a plurality of sheets on which images are printed, and the function of dividing the discharge destination of the plurality of sheets on which the images are formed into a plurality of trays. Examples of the sheet include various sheets such as plain paper, thick paper, and coated paper. The sheet may be a sheet other than paper, such as an overhead projector (OHP) film.

In the present embodiment, a case is illustrated where the image forming system further includes a digital front end (DFE) 103. In the present embodiment, a case is illustrated where a display device 104 is connected to the DFE 103 so that the display device 104 can communicate with the DFE 103. For example, the display device 104 includes a computer display such as a liquid crystal display. For example, the communication between the DFE 103 and the display device 104 is performed via a communication cable. The communication between the DFE 103 and the display device 104 may be wireless communication. In the present embodiment, a case is illustrated where the DFE 103 is connected to the image forming apparatus 101 via a network 105 so that the DFE 103 can communicate with the image forming apparatus 101. In the present embodiment, a case is illustrated where the image forming apparatus 101 is connected to the network 100 via the DFE 103. That is, in the present embodiment, a case is illustrated where the image forming apparatus 101 acquires information from the information processing apparatus 102 via the DFE 103. For example, the information from the information processing apparatus 102 includes an instruction to execute a print job. As described above, in the present embodiment, a case is illustrated where the communication between the DFE 103 and the image forming apparatus 101 is performed via the network 105. For example, the DFE 103 and the image forming apparatus 101 transmit and receive information such as print data, various commands, and a status notification to and from each other via the network 105. The communication between the image forming apparatus 101 and the DFE 103 is not limited to communication via the network 105. The communication between the image forming apparatus 101 and the DFE 103 may be wired communication, or may be wireless communication. The image forming system may not include the DFE 103. For example, as described above, the image forming system may be composed only of the image forming apparatus 101.

In the present embodiment, a case is illustrated where the image forming apparatus 101 includes a plurality of print modules. A sheet is conveyed to the plurality of print modules. The plurality of print modules is devices that each perform, on a sheet conveyed to the print modules, some processes in a series of processes from the feeding (supply) of the sheet to the discharge of the sheet. In the present embodiment, a case is illustrated where the plurality of print modules is linked to each other. The image forming apparatus 101 can perform complex sheet processing using the plurality of print modules. Examples of the print modules included in the image forming apparatus 101 are described below. In a case where a sheet is paper, "feeding" may be read as "sheet feeding".

For example, based on image data, a printer unit 213 forms (prints) an image using ink on a sheet fed from a feeding unit 214 and fixes the image to the sheet by drying the image. In the present embodiment, a case is illustrated where the printer unit 213 includes an image forming section 201, a first fixing section 205, a second fixing section 206, a cooling section 207, and a reverse section 208. In this case, each of the image forming section 201, the first fixing section 205, the second fixing section 206, the cooling section 207, and the reverse section 208 is an example of a print module.

For example, the image forming section 201 includes inkjet heads for yellow (Y), magenta (M), cyan (C), and black (K) colors. For example, the inkjet heads are linearly arranged in a direction perpendicular to the conveyance direction of a sheet. The image forming section 201 discharges droplets according to image data from the inkjet heads for the respective colors onto the sheet conveyed to a portion below the inkjet heads, thereby forming an image on the sheet. To improve the landing properties and the fixability of the droplets, the image forming section 201 may apply a primer to the sheet ahead of the discharge of the ink of the respective colors. In the present embodiment, a case is illustrated where an image forming process is performed on yellow (Y), magenta (M), cyan (C), and black (K) colors. The present invention, however, is not necessarily limited to this. For example, ink of any color termed a spot color may be used in addition to these colors. Ink of colors such as orange, violet, and green may be used as ink of additional colors. In some embodiments, there is preferably one or more print heads with each print head being provided for an individual color, more preferably there are at least three print heads with each print head being provided for an individual color. An image forming process on these colors may be performed.

The sheet on which a full-color image is formed in this manner is conveyed to the first fixing section 205 and the second fixing section 206. For example, each of the first fixing section 205 and the second fixing section 206 has a heat source such as a heater built-in. The first fixing section 205 and the second fixing section 206 dry the ink on the sheet on which the image is formed by heat, thereby fixing the image on the sheet. In some embodiments, there may be a single fixing section, that is to say the printing unit 213 may comprises one or more fixing sections. Then, the sheet is conveyed to the cooling section 207. The cooling section 207 cools the heated sheet.

The sheet cooled by the cooling section 207 is conveyed to the reverse section 208. To form an image on the back side of the sheet, the reverse section 208 reverses the direction of the sheet and conveys the sheet to the image forming section 201 again. In a case where an image is formed on only one side of the sheet, the reverse section 208 may not reverse the sheet.

The feeding unit 214 continuously supplies sheets as targets of image formation to the printer unit 213. Fig. 1 illustrates a case where the feeding unit 214 includes three feeding sections 202 to 204, however, in other embodiments the feeding unit may comprises one or more feedings sections. A discharge unit 215 accumulates final products (sheets) on which printing is already performed. Fig. 1 illustrates a case where the discharge unit 215 includes three discharge sections 209 to 211, however, in other embodiments the discharge unit may comprises one or more discharge sections. In this case, each of the feeding sections 202 to 204 and the discharge sections 209 to 211 is an example of a print module.

An informing device 212 informs the user of the status of the image forming apparatus 101 based on the lighting of a lamp (e.g., a light-emitting diode (LED)). In the present embodiment, a case is illustrated where the lighting operation of the lamp in the informing device 212 is controlled by the DFE 103.

In the following description, the image forming section 201, the feeding sections 202 to 204, the first fixing section 205, the second fixing section 206, the cooling section 207, the reverse section 208, and the discharge sections 209 to 211 are collectively referred to as "the print modules 201 to 211", where necessary.

The print modules 201 to 211 included in the image forming apparatus 101 include light-emitting informing sections 201a1 to 211a1, 201a2 to 211a2, and 201a3 to 204a3 as examples of a light-emitting section. For example, each of the light-emitting informing sections 201a1 to 211a1, 201a2 to 211a2, and 201a3 to 204a3 includes an LED, or some other light-emitting informing means which can be used to provide an visible external indication for informing a user. The light-emitting informing sections 201a1 to 211a1, 201a2 to 211a2, and 201a3 to 204a3 inform the user of the occurrence of an event in the print modules 201 to 211 in which the light-emitting informing sections 201a1 to 211a1, 201a2 to 211a2, and 201a3 to 204a3 are placed so that the user can identify the occurrence of the event. For example, informing the user of the occurrence of an event in the print modules 201 to 211 so that the user can identify the occurrence of the event is achieved by differentiating a light emission form. For example, the light emission form includes at least one of the presence or absence of lighting, the lighting color, the lighting intensity (the brightness when each light-emitting informing section lights up), the lighting time, and the pattern of lighting up and going out. In the present embodiment, a case is illustrated where informing using a light-emitting section is informing different from informing that changes the content of the informing using changing a shape represented by the combination of a plurality of light-emitting sections that lights up and goes out. For example, this information includes a character, a figure, and a symbol. The light-emitting informing sections 201a1 to 211a1, 201a2 to 211a2, and 201a3 to 204a3 may inform the user of the position and the content of an event that has occurred in the print modules 201 to 211 in which the light-emitting informing sections 201a1 to 211a1, 201a2 to 211a2, and 201a3 to 204a3 are placed, so that the user can identify the position and the content of the event. Examples of the user include an owner and a user of the image forming apparatus 101, the information processing apparatus 102, and the DFE 103. For example, the user may be a worker who repairs and maintains the image forming apparatus 101, the information processing apparatus 102, and the DFE 103. In other embodiments, each print modules may be comprising one or more light-emitting informing sections. In other embodiments one or more print modules may comprise one or more light-emitting sections. The light-emitting informing section may encode the event in such a way that a user may derive the event from the visual information provided by the light-emitting information section, for example the event may be encoded in at least one of color and blinking. Encoding may be further based on the number of light-emitting information sections in a single printing module.

As specific examples of informing using the light-emitting informing sections 201a1 to 211a1, 201a2 to 211a2, and 201a3 to 204a3, three examples are described below.

First, a first example is described. Suppose that a sheet conveyed to the second fixing section 206 is jammed in the second fixing section 206 (i.e., a so-called jam occurs). In this case, for example, the light-emitting informing section 206a1 or 206a2 included in the second fixing section 206 lights up in red, thereby informing the user that an event where it is difficult to continue printing has occurred due to a jam of a sheet in the second fixing section 206. In this case, for example, the light-emitting informing sections 206a1 and 206a2 included in the second fixing section 206 may light up in red.

Next, a second example is described. Suppose that processing cannot be continued because sheets are insufficient during the execution of a print job in the feeding section 202, 203, or 204.

In this case, for example, the light-emitting informing section 202a1, 203a1, or 204a1 included in the feeding section 202, 203, or 204, respectively, lights up in red, thereby informing the user that sheets are insufficient in the feeding section. In this case, for example, all the light-emitting informing sections 202a1 to 204a3 included in the feeding sections 202 to 204, respectively, may light up in red.

Next, a third example is described. Suppose that the stacking amount of sheets reaches a predetermined amount and no more sheets can be stacked during the execution of a print job in the discharge section 209, 210, or 211. In this case, for example, the light-emitting informing section 209a1, 210a1, or 211a1 included in the discharge section 209, 210, or 211, respectively, lights up in red, thereby informing the user that sheets cannot be stacked in the discharge section. In this case, for example, all the light-emitting informing sections 209a1 to 211a2 included in the discharge sections 209 to 211, respectively, may light up in red.

For example, the display device 104 included in the DFE 103 or the informing device 212 can also inform the user of information equivalent to the information of which the user is informed using the light-emitting informing sections 201a1 to 211a1, 201a2 to 211a2, and 201a3 to 204a3. The user, however, needs to determine which print module among many print modules included in the image forming apparatus 101 an event has occurred in and the content of the event that has occurred in the print module. Thus, the user needs to move to the place where the display device 104 is installed, and confirm the content of the information displayed on the display device 104. By the lighting operation of the lamp in the informing device 212, it is not easy to quickly inform the user of which print module among many print modules an event has occurred in.

On the other hand, in the present embodiment, a case is illustrated where in the print modules 201 to 211, the light-emitting informing sections 201a1 to 211a1, 201a2 to 211a2, and 201a3 to 204a3 are placed at positions visible to the user from outside the image forming apparatus 101. For example, the positions visible to the user from outside the image forming apparatus 101 are positions on the surfaces of the print modules 201 to 211. For example, the positions visible to the user from outside the image forming apparatus 101 may be positions inside the print modules 201 to 211. In this case, holes through which the inside and the outside of the print modules 201 to 211 communicate with each other may be formed in the print modules 201 to 211. The light-emitting informing sections 201a1 to 211a1, 201a2 to 211a2, and 201a3 to 204a3 may be viewed through the holes by the user from outside the image forming apparatus 101. In the present embodiment, a case is illustrated where the light-emitting informing sections 201a to 211a, 201a2 to 211a2, and 201a3 are provided in all the print modules 201 to 211 of the image forming apparatus 101. The present invention, however, is not necessarily limited to this. For example, there may be a print module in which a light-emitting informing section is not provided so long as light-emitting informing sections are provided in one or more print modules. For example, light-emitting informing sections may be provided in two or more print modules among all the print modules 201 to 211 of the image forming apparatus 101. The two or more print modules may be equal to the number of all the print modules of the image forming apparatus 101, or may be less than the number of all the print modules of the image forming apparatus 101. It is, however, desirable that light-emitting informing sections are to be provided in more print modules. This is because it is possible to increase the number of print modules in which light-emitting informing sections inform the user that an event has occurred.

In the present embodiment, a case is illustrated where the user is informed of the occurrence of an event using such a light-emitting informing section. In the present embodiment, a case is illustrated where a light-emitting informing section included in a print module in which an event has occurred is selectively lit. Thus, the user can quickly determine the print module in which the event has occurred, without approaching the image forming apparatus 101 (the light-emitting informing section). The user can identify the type of the event that has occurred, based on the color of the lighting of the light-emitting informing section. As described above, it is possible to make it easy for the user to grasp an event using the light-emitting informing sections 201a1 to 211a1, 201a2 to 211a2, and 201a3 to 204a3. Thus, it is possible to improve the operability and the convenience of the image forming apparatus 101.

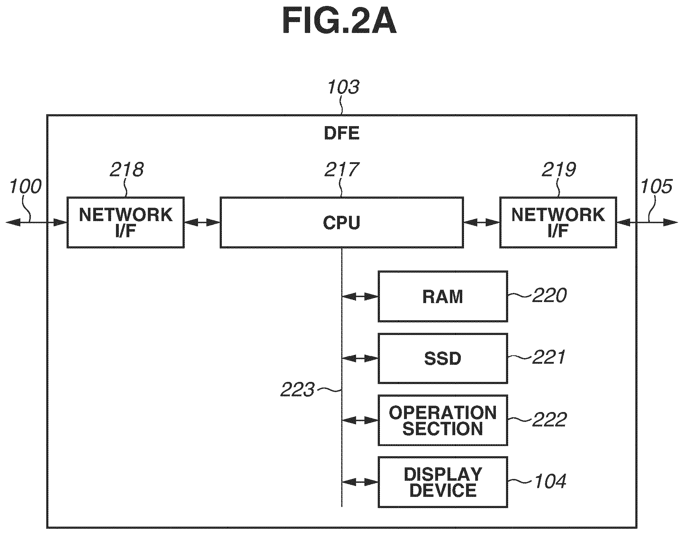

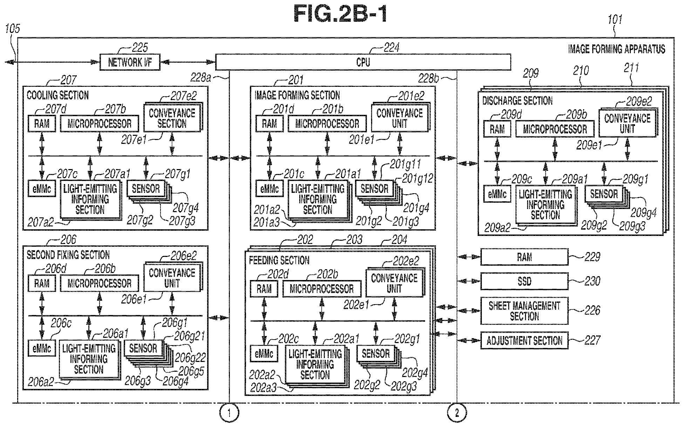

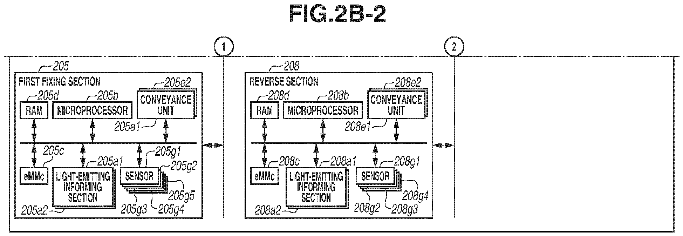

Fig. 2A is a diagram illustrating an example of the configuration of the DFE 103. Figs. 2B-1 and 2B-2 are a diagram illustrating an example of the configuration of the image forming apparatus 101. Blocks illustrated in Figs. 2A and 2B are divided into units as a system. Thus, there are portions that do not necessarily correspond to the units of the configuration illustrated in Fig. 1. Examples of the internal configurations of the DFE 103 and the image forming apparatus 101 are described below.

First, the example of the internal configuration of the DFE 103 is described.

In Fig. 2A, a network interface (I/F) 218 is used to communicate with an external apparatus connected to the network 100. For example, the network I/F 218 receives print job data transmitted from an external apparatus such as the information processing apparatus 102. The network I/F 218 transmits information regarding the status of the image forming apparatus 101 to the external apparatus. The print job data received by the network I/F 218 is processed by, for example, a central processing unit (CPU) 217 reading various programs stored in a solid-state drive (SSD) 221 into a random-access memory (RAM) 220 and executing the various programs. CPU stands for central processing unit. RAM stands for random access memory. SSD stands for solid-state drive.

Specific examples of the process executed in this manner include a series of processes regarding the print job. For example, the series of processes regarding the print job includes the rasterization of the print job data, a raster image processor (RIP) process, an image conversion process, and a color conversion process. The DFE 103 includes an operation section 222. The user gives instructions to execute various settings of the DFE 103, the setting of the job, and the adjustment of the image forming apparatus 101 through the operation section 222. The CPU 217 and these modules are connected to each other via a system bus 223.

The processing of the CPU 217 may be performed by one or more processors (e.g., graphics processing units (GPUs)) different from the CPU 217, in addition to or instead of the CPU 217. The processing of the CPU 217 may be performed by a plurality of pieces of hardware sharing the processing. At least a part of the processing of the CPU 217 may be performed by using dedicated hardware. For example, the dedicated hardware is an application-specific integrated circuit (ASIC) and a field-programmable gate array (FPGA). Also in the apparatuses other than the DFE 103, similarly, as described above, a processor may not be limited to a particular processor (e.g., a CPU), a plurality of pieces of hardware may share processing, and dedicated hardware may be used.

The print job data processed by the DFE 103 is transmitted from a network I/F 219 to the image forming apparatus 101 via the network 105.

Next, the example of the internal configuration of the image forming apparatus 101 is described.

A network I/F 225 is used to communicate with an external apparatus connected to the network 105. For example, the network I/F 225 is connected to the network I/F 219 included in the DFE 103 via the network 105 so that the network I/Fs 225 and 219 can communicate with each other. In this case, for example, the network I/F 225 receives print job data from the DFE 103. The network I/F 225 is used to transmit and receive a status and a command to and from the DFE 103.

A CPU 224 is a unit that governs the operation of the entirety of the image forming apparatus 101. In the present embodiment, a case is illustrated where the CPU 224 controls modules including the print modules 201 to 211 included in the image forming apparatus 101. The modules are connected to the CPU 224 via system buses 228a and 228b so that the modules and the CPU 224 can communicate with each other.

The CPU 224 executes various processes by reading various programs stored in an SSD 230 into a RAM 229 and executing the various programs.

In the present embodiment, a case is illustrated where the DFE 103 and the image forming apparatus 101 include the different CPUs 217 and 224, respectively. The present invention, however, is not necessarily limited to this. For example, the DFE 103 and the image forming apparatus 101 may be controlled by the same CPU.

A sheet management section 226 is a database forming a sheet library included in the image forming apparatus 101. The sheet management section 226 stores parameters of various media (sheets). An adjustment section 227 includes various sensors. The adjustment section 227 executes various calibrations and controls the various sensors. In the present embodiment, a case is illustrated where in addition to these modules, the print modules 201 to 211 are connected to the CPU 224 via the system buses 228a and 228b so that the print modules 201 to 211 and the CPU 224 can communicate with each other.

As described above, in the present embodiment, a case is illustrated where the image forming apparatus 101 includes the image forming section 201, the feeding sections 202 to 204, the first fixing section 205, the second fixing section 206, the cooling section 207, the reverse section 208, and the discharge sections 209 to 211 as print modules. Examples of the internal configurations of the print modules are described below.

First, the example of the internal configuration of the cooling section 207 is described.

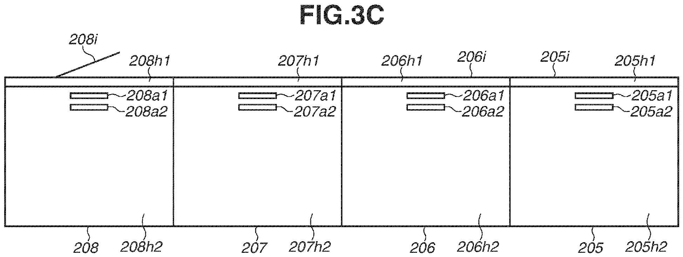

A microprocessor 207b controls sub-modules included in the cooling section 207, and the microprocessor 207b and the CPU 224 also notify each other of a control command and a status. An embedded MultiMediaCard (eMMC) 207c stores a program to be executed by the microprocessor 207b. A RAM 207d is a memory into which a program executed by the microprocessor 207b is loaded and which stores an execution result obtained by executing the program. Conveyance sections 207e1 and 207e2 are sheet conveyance units. The conveyance sections 207e1 and 207e2 convey a sheet in upper and lower conveyance paths, respectively. Conveyance processes by the conveyance sections 207e1 and 207e2 are controlled by the microprocessor 207b. Passage sensors 207g1 and 207g2 as examples of a detection section are sensors provided in exit portions of the conveyance sections 207e1 and 207e2, respectively. The passage sensors 207g1 and 207g2 are sensors that detect the presence or absence of a sheet in the exit portions of the conveyance sections 207e1 and 207e2, respectively. The passage sensors 207g1 and 207g2 are mainly used for a detection process for detecting a jam of a sheet that has occurred in the conveyance sections 207e1 and 207e2, respectively, in the cooling section 207. Opening/closing sensors 207g3 and 207g4 are sensors provided to detect the opening/closing states of doors 207h1 and 207h2, respectively, placed on the front surface of the cooling section 207. The doors 207h1 and 207h2 are placed on the upper side and the lower side, respectively, of the front surface of the cooling section 207 (see Fig. 3C).

The light-emitting informing sections 207a1 and 207a2 inform the user of the position and the content of an event that has occurred in the cooling section 207. In the present embodiment, a case is illustrated where the light-emitting informing sections 207a1 and 207a2 inform the user of the position and the content of an event that has occurred in the cooling section 207 based on the positions and the colors of the light-emitting informing sections 207a1 and 207a2 that light up. Examples of the details of which light-emitting informing section lights up in which color when which event occurs will be described below with reference to Fig. 3C. As described above, the user may be informed of the position and the content of an event that has occurred by a method other than the method using the positions and the colors of the light-emitting informing sections 207a1 and 207a2 that light up, such as the lighting time, the lighting intensity, or the pattern of lighting up and going out. Also in the light-emitting informing sections included in the print modules other than the cooling section 207, similarly, as described above, the method for informing the user of the position and the content of an event that has occurred is not limited.

Next, the example of the internal configuration of the first fixing section 205 is described.

A microprocessor 205b controls sub-modules included in the first fixing section 205, and the microprocessor 205b and the CPU 224 also notify each other of a control command and a status. An eMMC 205c stores a program to be executed by the microprocessor 205b. A RAM 205d is a memory into which a program executed by the microprocessor 205b is loaded and which stores an execution result obtained by executing the program. Conveyance sections 205e1 and 205e2 are sheet conveyance units. The conveyance sections 205e1 and 205e2 convey a sheet in upper and lower conveyance paths, respectively. Conveyance processes by the conveyance sections 205e1 and 205e2 are controlled by the microprocessor 205b. Passage sensors 205g1 and 205g2 as examples of a detection section are sensors provided in exit portions of the conveyance sections 205e1 and 205e2, respectively. The passage sensors 205g1 and 205g2 are sensors that detect the presence or absence of a sheet in the exit portions of the conveyance sections 205e1 and 205e2, respectively. The passage sensor 205g1 to 205g2 are mainly used for a detection process for detecting a jam of a sheet that has occurred in the conveyance sections 205e1 and 205e2, respectively, in the first fixing section 205. Opening/closing sensors 205g3 and 205g4 are sensors provided to detect the opening/closing states of doors 205h1 and 205h2, respectively, placed on the front surface or the upper surface of the first fixing section 205. In the present embodiment, a case is illustrated where the doors 205h1 and 205h2 are placed on the upper side and the lower side, respectively, of the front surface of the first fixing section 205 (see Fig. 3C). An opening/closing sensor 205g5 is a sensor provided to detect the opening/closing state of a cover placed on the upper surface of the first fixing section 205.

The light-emitting informing sections 205a1 and 205a2 inform the user of the position and the content of an event that has occurred in the first fixing section 205. In the present embodiment, a case is illustrated where the light-emitting informing sections 205a1 and 205a2 inform the user of the position and the content of an event that has occurred in the first fixing section 205 based on the positions and the colors of the light-emitting informing sections 205a1 and 205a2 that light up. Examples of the details of which light-emitting informing section lights up in which color when which event occurs will be described below with reference to Fig. 3C.

Next, the example of the internal configuration of the second fixing section 206 is described.

A microprocessor 206b controls sub-modules included in the second fixing section 206, and the microprocessor 206b and the CPU 224 also notify each other of a control command and a status. An eMMC 206c stores a program to be executed by the microprocessor 206b. A RAM 206d is a memory into which a program executed by the microprocessor 206b is loaded and which stores an execution result obtained by executing the program. Conveyance sections 206e1 and 206e2 are sheet conveyance units. The conveyance sections 206e1 and 206e2 convey a sheet in upper and lower conveyance paths, respectively. Conveyance processes by the conveyance sections 206e1 and 206e2 are controlled by the microprocessor 206b. A passage sensor 206g1 and passage sensors 206g21 and 206g22 as examples of a detection section are sensors provided in exit portions of conveyance sections 206e1 and 206e2, respectively. The passage sensor 206g1 and the passage sensors 206g21 and 206g22 are sensors that detect the presence or absence of a sheet in the exit portions of the conveyance sections 206e1 and 206e2, respectively. The passage sensors 206g1 and the passage sensors 206g21 and 206g22 are mainly used for a detection process for detecting a jam of a sheet that has occurred in the conveyance sections 206e1 and 206e2, respectively, in the second fixing section 206. Opening/closing sensors 206g3 and 206g4 are sensors provided to detect the opening/closing states of doors 206h1 and 206h2, respectively, placed on the front surface or the upper surface of the second fixing section 206. In the present embodiment, a case is illustrated where the doors 206h1 and 206h2 are placed on the upper side and the lower side, respectively, of the front surface of the second fixing section 206 (see Fig. 3C). An opening/closing sensor 206g5 is a sensor provided to detect the opening/closing state of a cover placed on the upper surface of the second fixing section 206.

The light-emitting informing sections 206a1 and 206a2 inform the user of the position and the content of an event that has occurred in the second fixing section 206. In the present embodiment, a case is illustrated where the light-emitting informing sections 206a1 and 206a2 inform the user of the position and the content of an event that has occurred in the second fixing section 206 based on the positions and the colors of the light-emitting informing sections 206a1 and 206a2 that light up. Examples of the details of which light-emitting informing section lights up in which color when which event occurs will be described below with reference to Fig. 3C.

Next, the example of the internal configuration of the image forming section 201 is described.

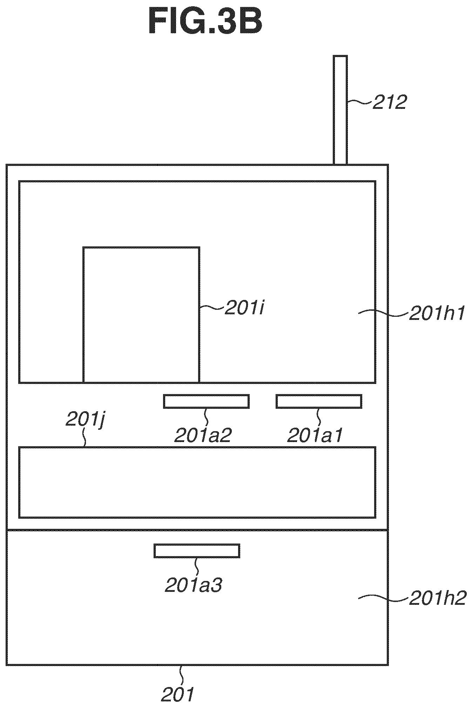

A microprocessor 201b controls sub-modules included in the image forming section 201, and the microprocessor 201b and the CPU 224 also notify each other of a control command and a status. An eMMC 201c stores a program to be executed by the microprocessor 201b. A RAM 201d is a memory into which a program executed by the microprocessor 201b is loaded and which stores an execution result obtained by executing the program. Conveyance sections 201e1 and 201e2 are sheet conveyance units. The conveyance sections 201e1 and 201e2 convey a sheet in upper and lower conveyance paths, respectively. Conveyance processes by the conveyance sections 201e1 and 201e2 are controlled by the microprocessor 201b. Passage sensors 201g11 and 201g12 and a passage sensor 201g2 as examples of a detection section are sensors provided in exit portions of the conveyance sections 201e1 and 201e2, respectively. The passage sensors 201g11 and 201g12 and the passage sensor 201g2 are sensors that detect the presence or absence of a sheet in the exit portions of the conveyance sections 201e1 and 201e2, respectively. The passage sensor 201g12 is a sensor that detects the presence or absence of a sheet in an entrance portion of a head portion 201i of the conveyance section 201el. The head portion 201i will be described below with reference to Fig. 3B. The passage sensors 201g11 and 201g12 and the passage sensor 201g2 are mainly used for a detection process for detecting a jam of a sheet that has occurred in the conveyance sections 201e1 and 201e2, respectively, in the image forming section 201. In the present embodiment, a case is illustrated where opening/closing sensors 201g3 and 201g4 are sensors provided to detect the opening/closing states of doors 201h1 and 201h2, respectively, placed on the front surface of the image forming section 201. The doors 201h1 and 201h2 are placed on the upper side and the lower side, respectively, of the front surface of the image forming section 201 (see Fig. 3B).

The light-emitting informing sections 201a1 to 201a3 inform the user of the position and the content of an event that has occurred in the image forming section 201. In the present embodiment, a case is illustrated where the light-emitting informing sections 201a1 to 201a3 inform the user of the position and the content of an event that has occurred in the image forming section 201 based on the positions and the colors of the light-emitting informing sections 201a1 to 201a3 that light up. Examples of the details of which light-emitting informing section lights up in which color when which event occurs will be described below with reference to Fig. 3B.

Next, the examples of the internal configurations of the feeding sections 202 to 204 are described. In the present embodiment, a case is illustrated where the feeding sections 202 to 204 have the same internal configuration. Thus, only the example of the internal configuration of the feeding section 202 is described, and the feeding sections 203 and 204 are not described in detail. At least one of the feeding sections 202 to 204 may have an internal configuration different from those of the others.

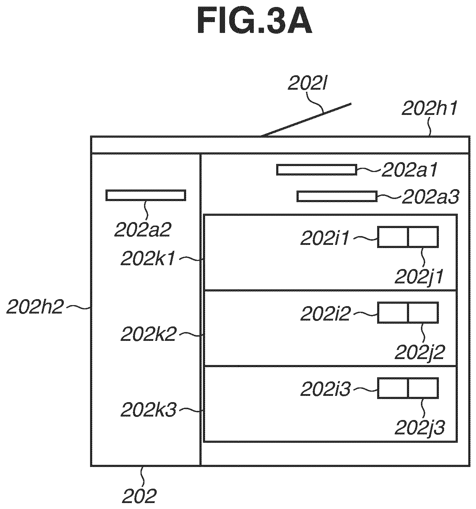

A microprocessor 202b controls sub-modules included in the feeding section 202, and the microprocessor 202b and the CPU 224 also notify each other of a control command and a status. An eMMC 202c stores a program to be executed by the microprocessor 202b. A RAM 202d is a memory into which a program executed by the microprocessor 202b is loaded and which stores an execution result obtained by executing the program. Conveyance sections 202e1 and 202e2 are sheet conveyance units. The conveyance sections 202e1 and 202e2 convey a sheet in upper and lower conveyance paths, respectively. Conveyance processes by the conveyance sections 202e1 and 202e2 are controlled by the microprocessor 202b. Passage sensors 202g1 and 202g2 as examples of a detection section are sensors provided in exit portions of the conveyance sections 202e1 and 202e2, respectively. The passage sensors 202g1 and 202g2 are sensors that detect the presence or absence of a sheet in the exit portions of the conveyance sections 202e1 and 202e2, respectively. The passage sensors 202g1 and 202g2 are mainly used for a detection process for detecting a jam of a sheet that has occurred in the conveyance sections 202e1 and 202e2, respectively, in the feeding section 202. Opening/closing sensors 202g3 and 202g4 are sensors provided to detect the opening/closing states of doors 202h1 and 202h2, respectively, placed on the front surface of the feeding section 202. The doors 202h1 and 202h2 are placed on the upper side and the lower side, respectively, of the front surface of the feeding section 202 (see Fig. 3A).

The light-emitting informing sections 202a1 to 202a3 inform the user of the position and the content of an event that has occurred in the feeding section 202. In the present embodiment, a case is illustrated where the light-emitting informing sections 202a1 to 202a3 inform the user of the position and the content of an event that has occurred in the feeding section 202 based on the positions and the colors of the light-emitting informing sections 202a1 to 202a3 that light up. Examples of the details of which light-emitting informing section lights up in which color when which event occurs will be described below with reference to Fig. 3A.

Next, the example of the internal configuration of the reverse section 208 is described.

A microprocessor 208b controls sub-modules included in the reverse section 208, and the microprocessor 208b and the CPU 224 also notify each other of a control command and a status. An eMMC 208c stores a program to be executed by the microprocessor 208b. A RAM 208d is a memory into which a program executed by the microprocessor 208b is loaded and which stores an execution result obtained by executing the program. Conveyance sections 208e1 and 208e2 are sheet conveyance units. The conveyance sections 208e1 and 208e2 convey a sheet in upper and lower conveyance paths, respectively. Conveyance processes by the conveyance sections 208e1 and 208e2 are controlled by the microprocessor 208b. Passage sensors 208g1 and 208g2 as examples of a detection section are sensors provided in exit portions of the conveyance sections 208e1 and 208e2, respectively. The passage sensors 208g1 and 208g2 are sensors that detect the presence or absence of a sheet in the exit portions of the conveyance sections 208e1 and 208e2, respectively. The passage sensors 208g1 and 208g2 are mainly used for a detection process for detecting a jam of a sheet that has occurred in the conveyance sections 208e1 and 208e2, respectively, in the reverse section 208. Opening/closing sensors 208g3 and 208g4 are sensors provided to detect the opening/closing states of doors 208h1 and 208h2, respectively, placed on the front surface of the reverse section 208. The doors 208h1 and 208h2 are placed on the upper side and the lower side, respectively, of the front surface of the reverse section 208 (see Fig. 3C).

The light-emitting informing sections 208a1 and 208a2 inform the user of the position and the content of an event that has occurred in the reverse section 208. In the present embodiment, a case is illustrated where the light-emitting informing sections 208a1 and 208a2 inform the user of the position and the content of an event that has occurred in the reverse section 208 based on the positions and the colors of the light-emitting informing sections 208a1 and 208a2 that light up. Examples of the details of which light-emitting informing section lights up in which color when which event occurs will be described below with reference to Fig. 3C.

Next, the examples of the internal configurations of the discharge sections 209 to 211 are described. In the present embodiment, a case is illustrated where the discharge sections 209 to 211 have the same internal configuration. Thus, only the example of the internal configuration of the discharge section 209 is described, and the discharge sections 210 and 211 are not described in detail. At least one of the discharge sections 209 to 211 may have an internal configuration different from those of the others.

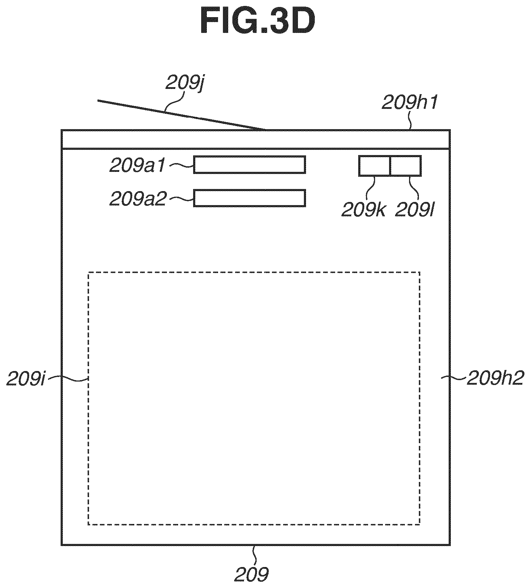

A microprocessor 209b controls sub-modules included in the discharge section 209, and the microprocessor 209b and the CPU 224 also notify each other of a control command and a status. An eMMC 209c stores a program to be executed by the microprocessor 209b. A RAM 209d is a memory into which a program executed by the microprocessor 209b is loaded and which stores an execution result obtained by executing the program. Conveyance sections 209e1 and 209e2 are sheet conveyance units. The conveyance sections 209e1 and 209e2 convey a sheet in upper and lower conveyance paths, respectively. Conveyance processes by the conveyance sections 209e1 and 209e2 are controlled by the microprocessor 209b. Passage sensors 209g1 and 209g2 as examples of a detection section are sensors provided in exit portions of the conveyance sections 209e1 and 209e2, respectively. The passage sensors 209g1 and 209g2 are sensors that detect the presence or absence of a sheet in the exit portions of the conveyance sections 209e1 and 209e2, respectively. The passage sensors 209g1 and 209g2 are mainly used for a detection process for detecting a jam of a sheet that has occurred in the conveyance sections 209e1 and 209e2, respectively, in the discharge section 209. Opening/closing sensors 209g3 and 209g4 are sensors provided to detect the opening/closing states of doors 209h1 and 209h2, respectively, placed on the front surface of the discharge section 209. The doors 209h1 and 209h2 are placed on the upper side and the lower side, respectively, of the front surface of the discharge section 209 (see Fig. 3D).

The light-emitting informing sections 209a1 and 209a2 inform the user of the position and the content of an event that has occurred in the discharge section 209. In the present embodiment, a case is illustrated where the light-emitting informing sections 209a1 and 209a2 inform the user of the position and the content of an event that has occurred in the discharge section 209 based on the positions and the colors of the light-emitting informing sections 209a1 and 209a2 that light up. Examples of the details of which light-emitting informing section lights up in which color when which event occurs will be described below with reference to Fig. 3D.

On the entire surface or the upper surface of each of the conveyance paths included in the print modules, a door (a cover) is provided, and the conveyance paths included in each print module are located inside the print module. Thus, for example, in a case where a jam of a sheet occurs during the execution of a printing process and the user performs maintenance work such as removing the sheet stopped on a conveyance path, the user accesses the conveyance path by opening the door (the cover). After the necessary maintenance work ends, the user restores the state of the image forming apparatus 101 to the original state by closing the door (the cover). Accordingly, in the present embodiment, a case is illustrated where the image forming apparatus 101 detects the completion of the work of the restoration from the state where the sheet is jammed, based on a change in the opening/closing state of the door (the cover), and further internally executes a subsequent restoration process. In this case, each of the opening/closing sensors (e.g., the opening/closing sensors 201g3 and 201g4) included in the print modules is used to detect the operation of opening and closing the door (the cover) involved in the restoration work performed by the user. In the description of the present embodiment, the user who performs the maintenance work is not limited to the owner and the user of the image forming apparatus 101 (e.g., a person who gives a print instruction to the image forming apparatus 101). For example, the user who performs the maintenance work may be a worker of the manufacturer of the image forming apparatus 101.

Fig. 3A is a diagram illustrating an example of the external configuration of the feeding section 202. In the present embodiment, a case is illustrated where the feeding sections 202 to 204 have the same external configuration. Thus, only the example of the external configuration of the feeding section 202 is described, and the feeding sections 203 and 204 are not described in detail. At least one of the feeding sections 202 to 204 may have an external configuration different from those of the others.

Fig. 3A illustrates a case where the feeding section 202 includes three trays 202k1 to 202k3. The trays 202k1 to 202k3 can store sheets of different sheet types and sizes. The trays 202k1, 202k2, and 202k3 include tray opening instruction sections 202i1, 202i2, and 202i3 and remaining amount display sections 202j1, 202j2, and 202j3, respectively. If the tray opening instruction sections 202i1, 202i2, and 202i3 are operated, the trays 202k1, 202k2, and 202k3, respectively, are pulled out of the feeding section 202. The remaining amount display sections 202j1, 202j2, and 202j3 display the remaining amounts of sheets stored in the trays 202k1, 202k2, and 202k3, respectively.

An escape tray 2021 is a tray to which a sheet that potentially enters a folded state or a multi-fed state is discharged so that a folded sheet or multi-fed sheets are not conveyed to the image forming section 201.

In the present embodiment, a case is illustrated where the feeding section 202 includes the three light-emitting informing sections 202a1 to 202a3. In the present embodiment, a case is illustrated where on the front surface of the feeding section 202, the light-emitting informing section 202a1 is provided above the light-emitting informing section 202a2. In the present embodiment, a case is illustrated where the lower light-emitting informing section 202a2 of the feeding section 202 lights up in red in a case where a jam of a sheet occurs in the lower conveyance section 202e2 in the feeding section 202. In the present embodiment, a case is illustrated where the upper light-emitting informing section 202a1 of the feeding section 202 lights up in red in a case where a jam of a sheet occurs in the upper conveyance section 202e1 in the feeding section 202. In the present embodiment, a case is illustrated where the light-emitting informing section 202a1 informs the user of a state different from a jam of a sheet as the state of the feeding section 202. Specifically, in the present embodiment, a case is illustrated where the light-emitting informing section 202a1 lights up in red also in a case where the escape tray 2021 enters a trayful state where the escape tray 2021 is full of sheets discharged onto the escape tray 2021. In the present embodiment, a case is illustrated where the light-emitting informing section 202a1 lights up in yellow in a case where the escape tray 2021 enters a state close to a trayful state.

If the escape tray 2021 enters a trayful state where the escape tray 2021 is full of sheets discharged onto the escape tray 2021, for example, the light-emitting informing section 202a1 may light up in a color other than red and yellow.

In the present embodiment, a case is illustrated where the light-emitting informing section 202a3 of the feeding section 202 lights up to inform the user that there are no remaining amounts or small remaining amounts of sheets stored in the cassettes 202k1 to 202k3 included in the feeding section 202.

Fig. 3B is a diagram illustrating an example of the external configuration of the image forming section 201.

As described above, the informing device 212 informs the user of the status of the image forming apparatus 101 based on the lighting of the lamp.

The image forming section 201 includes a head portion 201i. For example, in the head portion 201i, the inkjet heads and a control unit for the inkjet heads are placed. For example, an ink tank control section 201j performs the processes of replenishing ink and replacing waste ink and displays the remaining amounts of ink.

In the present embodiment, a case is illustrated where the light-emitting informing sections 201a1 and 202a2 light up in red in a case where a jam of a sheet occurs in the upper conveyance section 201e1 in the image forming section 201. Normally, a single light-emitting informing section is provided with respect to each of the upper conveyance section 201e1 and the lower conveyance section 201e2. The maintenance of the head portion 201i, however, requires a particularly high skill. Accordingly, in the present embodiment, a case is illustrated where the image forming section 201 includes the two light-emitting informing sections 201a1 and 201a2 as light-emitting informing sections that light up in a case where a jam of a sheet occurs in the upper conveyance section 201e1 in the image forming section 201. The light-emitting informing section 201a2 is a light-emitting informing section that informs the user of a jam of a sheet in the head portion 201i. The light-emitting informing section 201a1 is a light-emitting informing section that informs the user of a jam of a sheet downstream (on the exit side) of the head portion 201i. In the present embodiment, a case is illustrated where the light-emitting informing sections 201a1 and 201a2 are provided above the light-emitting informing section 201a3.

In the present embodiment, a case is illustrated where the lower light-emitting informing section 201a3 lights up in red in a case where a jam of a sheet occurs in the lower conveyance section 201e2 in the image forming section 201.

Fig. 3C is a diagram illustrating examples of the external configurations of the first fixing section 205, the second fixing section 206, the cooling section 207, and the reverse section 208. In the present embodiment, a case is illustrated where the reverse section 208 includes an escape tray 208i. To the escape tray 208i, a sheet present in a conveyance path in the image forming apparatus 101 in a case where an error occurs in the image forming apparatus 101 is discharged. The first fixing section 205 and the second fixing section 206 heat a sheet using the heaters to dry the sheet. Thus, in the present embodiment, a case is illustrated where covers 205i and 206i are provided above the first fixing section 205 and the second fixing section 206, respectively, so that the user does not inadvertently touch heated portions of the first fixing section 205 and the second fixing section 206.

In the present embodiment, a case is illustrated where on the front surface of the first fixing section 205, the light-emitting informing section 205a1 is provided above the light-emitting informing section 205a2. In the present embodiment, a case is illustrated where the upper light-emitting informing section 205a1 of the first fixing section 205 lights up in red in a case where a jam of a sheet occurs in the upper conveyance section 205e1 in the first fixing section 205. In the present embodiment, a case is illustrated where the lower light-emitting informing section 205a2 of the first fixing section 205 lights up in red in a case where a jam of a sheet occurs in the lower conveyance section 205e2 in the first fixing section 205.

In the present embodiment, a case is illustrated where on the front surface of the second fixing section 206, the light-emitting informing section 206a1 is provided above the light-emitting informing section 206a2. In the present embodiment, a case is illustrated where the upper light-emitting informing section 206a1 of the second fixing section 206 lights up in red in a case where a jam of a sheet occurs in the upper conveyance section 206e1 in the second fixing section 206. In the present embodiment, a case is illustrated where the lower light-emitting informing section 206a2 of the second fixing section 206 lights up in red in a case where a jam of a sheet occurs in the lower conveyance section 206e2 in the second fixing section 206.

In the present embodiment, a case is illustrated where on the front surface of the cooling section 207, the light-emitting informing section 207a1 is provided above the light-emitting informing section 207a2. In the present embodiment, a case is illustrated where the upper light-emitting informing section 207a1 of the cooling section 207 lights up in red in a case where a jam of a sheet occurs in the upper conveyance section 207e1 in the cooling section 207. In the present embodiment, a case is illustrated where the lower light-emitting informing section 207a2 of the cooling section 207 lights up in red in a case where a jam of a sheet occurs in the lower conveyance section 207e2 in the cooling section 207.

In the present embodiment, a case is illustrated where on the front surface of the reverse section 208, the light-emitting informing section 208a1 is provided above the light-emitting informing section 208a2. In the present embodiment, a case is illustrated where the upper light-emitting informing section 208a1 of the reverse section 208 lights up in red in a case where a jam of a sheet occurs in the upper conveyance section 208e1 in the reverse section 208. In the present embodiment, a case is illustrated where the lower light-emitting informing section 208a2 of the reverse section 208 lights up in red in a case where a jam of a sheet occurs in the lower conveyance section 208e2 in the reverse section 208.

Fig. 3D is a diagram illustrating an example of the external configuration of the discharge section 209. In the present embodiment, a case is illustrated where the discharge sections 209 to 211 have the same external configuration. Thus, only the example of the external configuration of the discharge section 209 is described, and the discharge sections 210 and 211 are not described in detail. At least one of the discharge sections 209 to 211 may have an external configuration different from those of the others.

In the present embodiment, a case is illustrated where the discharge section 209 includes two discharge parts. A stacking portion 209i is a portion used to stack a large number of sheets. The stacking portion 209i is protected by the door 209h2. To a sample tray 209j, a small number of sheets are discharged. The sample tray 209j is not protected by a door. To improve the property of stacking sheets in the stacking portion 209i, in the present embodiment, a case is illustrated where the stacking portion 209i has a jogger mechanism (a mechanism for aligning sheets) (not illustrated). As illustrated in Fig. 1, in a case where the image forming apparatus 101 includes the plurality of discharge sections 209 to 211, each of the plurality of discharge sections 209 to 211 may include a stacking portion. In the present embodiment, a case is illustrated where the image forming apparatus 101 has a function capable of treating a plurality of stacking portions as a single discharge destination (a tray linking function).

An ejection instruction section 209k is operated by the user to release the lock on the door 209h2. If the lock on the door 209h2 is released, the user can access the stacking portion 209i inside the discharge section 209. Consequently, the user can take out sheets stacked inside the discharge section 209. A stacking amount notification section 2091 displays the stacking amount (the height) of sheets stacked in the stacking portion 209i in a stepwise manner according to the stacking amount.

In the present embodiment, a case is illustrated where on the front surface of the discharge section 209, the light-emitting informing section 209a1 is provided above the light-emitting informing section 209a2. In the present embodiment, a case is illustrated where the upper light-emitting informing section 209a1 of the discharge section 209 lights up in red in a case where a jam of a sheet occurs in the upper conveyance section 209e1 in the discharge section 209. In the present embodiment, a case is illustrated where the upper light-emitting informing section 209a1 lights up in red in a case where the sample tray 209j of the discharge section 209 is full of sheets stacked in the sample tray 209j. In the present embodiment, a case is illustrated where the upper light-emitting informing section 209a1 of the discharge section 209 lights up in yellow in a case where sheets stacked in the sample tray 209j of the discharge section 209 come close to a full state. If the sample tray 209j of the discharge section 209 is full of sheets stacked in the sample tray 209j, for example, the light-emitting informing section 209a1 may light up in a color other than red and yellow.

In the present embodiment, a case is illustrated where the lower light-emitting informing section 209a2 of the discharge section 209 lights up in red in a case where a jam of a sheet occurs in the lower conveyance section 209e2 in the discharge section 209. In the present embodiment, a case is illustrated where the lower light-emitting informing section 209a2 of the discharge section 209 lights up in red in a case where the stacking portion 209i of the discharge section 209 is full of sheets stacked in the stacking portion 209i. In the present embodiment, a case is illustrated where the lower light-emitting informing section 209a2 of the discharge section 209 lights up in yellow in a case where sheets stacked in the stacking portion 209i of the discharge section 209 come close to a full state. If the stacking portion 209i of the discharge section 209 is full of sheets stacked in the stacking portion 209i, for example, the light-emitting informing section 209a2 may light up in a color other than red and yellow.

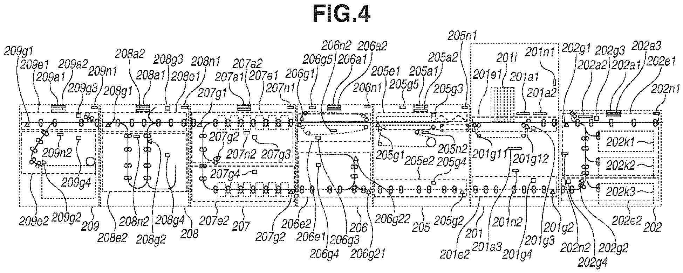

Fig. 4 is a diagram illustrating an example of the internal configuration of the entirety of the image forming apparatus 101. With reference to Fig. 4, descriptions are given of examples of the forms of the sheet conveyance paths, examples of the positional relationships between the passage sensors, and examples of the placement relationships between the light-emitting informing sections in each print module included in the image forming apparatus 101. As described above, in the present embodiment, a case is illustrated where the configurations of the feeding sections 202 to 204 are the same as each other.

In the present embodiment, a case is illustrated where the configurations of the discharge sections 209 to 211 are the same as each other. Thus, Fig. 4 illustrates only the feeding section 202 and the discharge section 209 among the feeding sections 202 to 204 and the discharge sections 209 to 211, and does not illustrate the feeding sections 203 and 204 and the discharge sections 210 and 211. The feeding sections 203 and 204 and the discharge sections 210 and 211 are not described in detail here.

First, the feeding section 202 is described. In the present embodiment, a case is illustrated where the conveyance sections 202e1 and 202e2 are placed at positions illustrated in Fig. 4. In the exit portions of the conveyance sections 202e1 and 202e2, the passage sensors 202g1 and 202g2, respectively, are placed. The passage sensors 202g1 and 202g2 detect that a sheet that is being conveyed in the conveyance paths passes through detection regions of the passage sensors 202g1 and 202g2, respectively. The passage sensors 202g1 and 202g2 according to the present embodiment are used to detect the occurrence of a jam of a sheet.

For example, a jam of a sheet is detected by the following method.

Based on an instruction from the CPU 224, the microprocessor included in each print module such as the feeding section 202 controls the conveyance sections included in the print module including the microprocessor. Consequently, a sheet is conveyed. If the sheet is conveyed to the print module in this manner, the sheet moves in the print module and then is conveyed to outside the print module by the conveyance sections included in the print module being controlled.

At this time, based on the relationships between the conveyance speed of the sheet and the shapes and the lengths of the conveyance paths inside the print module, the time required from the conveyance of the sheet to inside the print module to the conveyance of the sheet to outside the print module is calculated. For example, the calculation of this time is performed by the CPU 224. This time is a time assumed as the time in which the sheet is present in the print module. In the following description, this time is referred to as an "in-apparatus assumed time", where necessary. If the sheet is detected by a passage sensor when the in-apparatus assumed time in the print module elapses, the CPU 224 can determine that the conveyance process in the print module is performed as assumed. If, on the other hand, the sheet is not detected by a passage sensor even though the in-apparatus assumed time in the print module elapses, the CPU 224 can determine that the sheet is not properly conveyed in the print module. That is, the CPU 224 can determine that the conveyance process in the print module is stagnating because a jam of the sheet occurs in the print module. Accordingly, in the present embodiment, a case is illustrated where passage sensors are placed in the exit portions (downstream) of the conveyance paths of each print module. In the present embodiment, a case is illustrated where based on the detection results of the passage sensors of each print module, the CPU 224 determines whether a sheet is conveyed to outside the print module at the time when the in-apparatus assumed time regarding a sheet in the print module elapses.

In the present embodiment, a case is illustrated where based on the detection result of the passage sensor 202g2, the CPU 224 determines whether a jam of a sheet occurs in the lower conveyance section 202e2.

In the present embodiment, a case is illustrated where if a jam of a sheet occurs in the lower conveyance section 202e2, the CPU 224 lights the lower light-emitting informing section 202a2 in red. This informs the user that a jam of a sheet occurs in the lower conveyance section 202e2. In the present embodiment, a case is illustrated where based on the detection result of the passage sensor 202g1, the CPU 224 determines whether a jam of a sheet occurs in the upper conveyance section 202e1.

In the present embodiment, a case is illustrated where if a jam of a sheet occurs in the upper conveyance section 202e1, the CPU 224 lights the upper light-emitting informing section 202a1 in red. This informs the user that a jam of a sheet occurs in the upper conveyance section 202e1.

Next, the image forming section 201 is described. In the present embodiment, a case is illustrated where the conveyance sections 201e1 and 201e2 are placed at positions illustrated in Fig. 4. In the exit portions of the conveyance sections 201e1 and 201e2, the passage sensors 201g11 and 201g2, respectively, are placed. In the entrance portion of the head portion 201i, the passage sensor 201g12 is placed. In the present embodiment, a case is illustrated where based on the detection result of the passage sensor 201g11, the CPU 224 determines whether a jam of a sheet occurs in the exit portion of the upper conveyance section 201e1. In the present embodiment, a case is illustrated where if a jam of a sheet occurs in the exit portion of the upper conveyance section 201e1, the CPU 224 lights the upper light-emitting informing section 201a1 in red. This informs the user that a jam of a sheet occurs in the exit portion of the upper conveyance section 201e1. In the present embodiment, a case is illustrated where based on the detection result of the passage sensor 201g12, the CPU 224 determines whether a jam of a sheet occurs in the entrance portion of the head portion 201i of the upper conveyance section 201e1. In the present embodiment, a case is illustrated where the CPU 224 lights the upper light-emitting informing section 201a2 in red. This informs the user that a jam of a sheet occurs in the entrance portion of the head portion 201i of the upper conveyance section 201e1.

In the present embodiment, a case is illustrated where based on the detection result of the passage sensor 201g2, the CPU 224 determines whether a jam of a sheet occurs in the exit portion of the lower conveyance section 201e2. In the present embodiment, a case is illustrated where if a jam of a sheet occurs in the exit portion of the lower conveyance section 201e2, the CPU 224 lights the lower light-emitting informing section 201a3 in red. This informs the user that a jam of a sheet occurs in the lower conveyance section 201e2. Since an example of the method for detecting a jam of a sheet is as described above, the method for detecting a jam of a sheet is not described in detail here.

Next, the first fixing section 205 is described. In the present embodiment, a case is illustrated where the conveyance sections 205e1 and 205e2 are placed at positions illustrated in Fig. 4. In the exit portions of the conveyance sections 205e1 and 205e2, the passage sensors 205g1 and 205g2, respectively, are placed. In the present embodiment, a case is illustrated where based on the detection result of the passage sensor 205g1, the CPU 224 determines whether a jam of a sheet occurs in the exit portion of the upper conveyance section 205e1. In the present embodiment, a case is illustrated where if a jam of a sheet occurs in the exit portion of the upper conveyance section 205e1, the CPU 224 lights the upper light-emitting informing section 205a1 in red. This informs the user that a jam of a sheet occurs in the exit portion of the upper conveyance section 205e1.

In the present embodiment, a case is illustrated where based on the detection result of the passage sensor 205g2, the CPU 224 determines whether a jam of a sheet occurs in the exit portion of the lower conveyance section 205e2. In the present embodiment, a case is illustrated where if a jam of a sheet occurs in the exit portion of the lower conveyance section 205e2, the CPU 224 lights the lower light-emitting informing section 205a2 in red. This informs the user that a jam of a sheet occurs in the lower conveyance section 205e2. Since an example of the method for detecting a jam of a sheet is as described above, the method for detecting a jam of a sheet is not described in detail here.

Next, the second fixing section 206 is described. In the present embodiment, a case is illustrated where the conveyance sections 206e1 and 206e2 are placed at positions illustrated in Fig. 4. In the exit portions of the conveyance sections 206e1 and 206e2, the passage sensor 206g1 and the passage sensors 206g21 and 206g22, respectively, are placed. In the present embodiment, a case is illustrated where based on the detection result of the passage sensor 206g1, the CPU 224 determines whether a jam of a sheet occurs in the exit portion of the upper conveyance section 206e1. In the present embodiment, a case is illustrated where if a jam of a sheet occurs in the exit portion of the upper conveyance section 206e1, the CPU 224 lights the upper light-emitting informing section 206a1 in red. This informs the user that a jam of a sheet occurs in the exit portion of the upper conveyance section 206e1.

In the present embodiment, a case is illustrated where based on the detection results of the passage sensors 206g21 and 206g22, the CPU 224 determines whether a jam of a sheet occurs in the exit portion of the lower conveyance section 206e2. In the present embodiment, a case is illustrated where if a jam of a sheet occurs in the exit portion of the lower conveyance section 206e2, the CPU 224 lights the lower light-emitting informing section 206a2 in red. This informs the user that a jam of a sheet occurs in the lower conveyance section 206e2. Since an example of the method for detecting a jam of a sheet is as described above, the method for detecting a jam of a sheet is not described in detail here.

Next, the cooling section 207 is described. In the present embodiment, a case is illustrated where the conveyance sections 207e1 and 207e2 are placed at positions illustrated in Fig. 4. In the exit portions of the conveyance sections 207e1 and 207e2, the passage sensors 207g1 and 207g2, respectively, are placed. In the present embodiment, a case is illustrated where based on the detection result of the passage sensor 207g1, the CPU 224 determines whether a jam of a sheet occurs in the exit portion of the upper conveyance section 207e1. In the present embodiment, a case is illustrated where if a jam of a sheet occurs in the exit portion of the upper conveyance section 207e1, the CPU 224 lights the upper light-emitting informing section 207a1 in red. This informs the user that a jam of a sheet occurs in the exit portion of the upper conveyance section 207e1.

In the present embodiment, a case is illustrated where based on the detection result of the passage sensor 207g2, the CPU 224 determines whether a jam of a sheet occurs in the exit portion of the lower conveyance section 207e2. In the present embodiment, a case is illustrated where if a jam of a sheet occurs in the exit portion of the lower conveyance section 207e2, the CPU 224 lights the lower light-emitting informing section 207a2 in red. This informs the user that a jam of a sheet occurs in the lower conveyance section 207e2. Since an example of the method for detecting a jam of a sheet is as described above, the method for detecting a jam of a sheet is not described in detail here.

Next, the reverse section 208 is described. In the present embodiment, a case is illustrated where the conveyance sections 208e1 and 208e2 are placed at positions illustrated in Fig. 4. In the exit portions of the conveyance sections 208e1 and 208e2, the passage sensors 208g1 and 208g2, respectively, are placed. In the present embodiment, a case is illustrated where based on the detection result of the passage sensor 208g1, the CPU 224 determines whether a jam of a sheet occurs in the exit portion of the upper conveyance section 208e1. In the present embodiment, a case is illustrated where if a jam of a sheet occurs in the exit portion of the upper conveyance section 208e1, the CPU 224 lights the upper light-emitting informing section 208a1 in red. This informs the user that a jam of a sheet occurs in the exit portion of the upper conveyance section 208e1.

In the present embodiment, a case is illustrated where based on the detection result of the passage sensor 208g2, the CPU 224 determines whether a jam of a sheet occurs in the exit portion of the lower conveyance section 208e2. In the present embodiment, a case is illustrated where if a jam of a sheet occurs in the exit portion of the lower conveyance section 208e2, the CPU 224 lights the lower light-emitting informing section 208a2 in red. This informs the user that a jam of a sheet occurs in the lower conveyance section 208e2. Since an example of the method for detecting a jam of a sheet is as described above, the method for detecting a jam of a sheet is not described in detail here.

Next, the discharge section 209 is described. In the present embodiment, a case is illustrated where the conveyance sections 209e1 and 209e2 are placed at positions illustrated in Fig. 4. In the exit portions of the conveyance sections 209e1 and 209e2, the passage sensors 209g1 and 209g2, respectively, are placed. In the present embodiment, a case is illustrated where based on the detection result of the passage sensor 209g1, the CPU 224 determines whether a jam of a sheet occurs in the exit portion of the upper conveyance section 209e1. In the present embodiment, a case is illustrated where if a jam of a sheet occurs in the exit portion of the upper conveyance section 209e1, the CPU 224 lights the upper light-emitting informing section 209a1 in red. This informs the user that a jam of a sheet occurs in the exit portion of the upper conveyance section 209e1.

In the present embodiment, a case is illustrated where based on the detection result of the passage sensor 209g2, the CPU 224 determines whether a jam of a sheet occurs in the exit portion of the lower conveyance section 209e2. In the present embodiment, a case is illustrated where if a jam of a sheet occurs in the exit portion of the lower conveyance section 209e2, the CPU 224 lights the lower light-emitting informing section 209a2 in red. This informs the user that a jam of a sheet occurs in the lower conveyance section 209e2. Since an example of the method for detecting a jam of a sheet is as described above, the method for detecting a jam of a sheet is not described in detail here.

The upper doors 201h1, 202h1, 205h1, 206h1, 207h1, 208h1, and 209h1 include door solenoids 201n1, 202n1, 205n1, 206n1, 207n1, 208n1, and 209n1, respectively. The lower doors 201h2, 202h2, 205h2, 206h2, 207h2, 208h2, and 209h2 include door solenoids 201n2, 202n2, 205n2, 206n2, 207n2, 208n2, and 209n2, respectively. Each door solenoid includes a solenoid coil. If a current flows through the solenoid coil, the door solenoid generates an electromagnetic force. The iron core is attracted by the electromagnetic force, whereby the door is locked. While the door solenoid is carrying the current, the iron core is constantly attracted to the side where the door is locked, and therefore, the door is locked. If the application of the current to the solenoid coil is stopped, an attractive force acting on the door disappears, and therefore, the lock on the door is released.

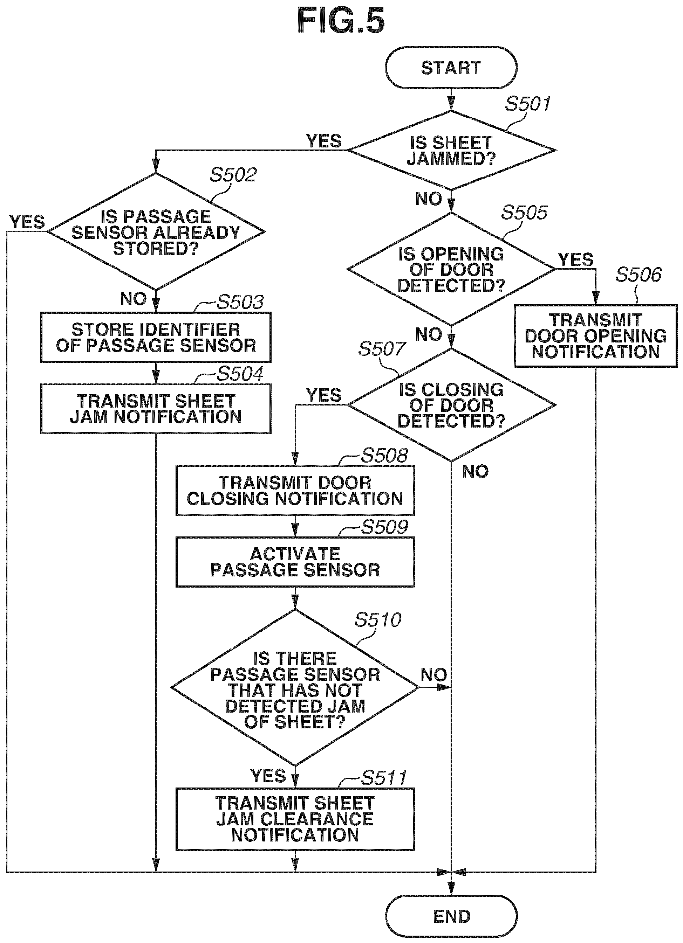

Fig. 5 is a flowchart illustrating an example of the flow of the processing of each of the microprocessors of the print modules 201 to 211 in a case where the print module receives signals from the sensors included in the print module.

The processing of the flowchart in Fig. 5 starts, for example, if each microprocessor receives a signal from any of the sensors of the print module including the microprocessor.

As described above, each of the print modules 201 to 211 includes a door (e.g., the door 201h1) for accessing an area in an upper conveyance section (e.g., the conveyance section 201e1). Each of the print modules 201 to 211 includes an opening/closing sensor (e.g., the opening/closing sensor 201g3) that detects the opening and closing of the upper door (e.g., the door 201h1), and an upper door solenoid (e.g., the door solenoid 201n1) that locks the upper door. Each of the print modules 201 to 211 includes an upper light-emitting informing section (e.g., the light-emitting informing sections 201a1 and 201a2) that informs the user that an error (an abnormal state) such as a jam of a sheet occurs in the upper conveyance section (e.g., the conveyance section 201e1). Each of the print modules 201 to 211 includes an upper passage sensor (e.g., the passage sensors 201g11 and 201g12) that detects a jam of a sheet in the upper conveyance section (e.g., the conveyance section 201e1).

Each of the print modules 201 to 211 includes a door (e.g., the door 201h2) for accessing an area in a lower conveyance section (e.g., the conveyance section 201e2). Each of the print modules 201 to 211 includes an opening/closing sensor (e.g., the opening/closing sensor 201g4) that detects the opening and closing of the lower door (e.g., the door 201h2), and a lower door solenoid (e.g., the door solenoid 201n2) that locks the lower door. Each of the print modules 201 to 211 includes a lower light-emitting informing section (e.g., the light-emitting informing section 201a3) that informs the user that an error (an abnormal state) such as a jam of a sheet occurs in the lower conveyance section (e.g., the conveyance section 201e2). Each of the print modules 201 to 211 includes a lower passage sensor (e.g., the passage sensor 201g2) that detects a jam of a sheet in the lower conveyance section (e.g., the conveyance section 202e1).

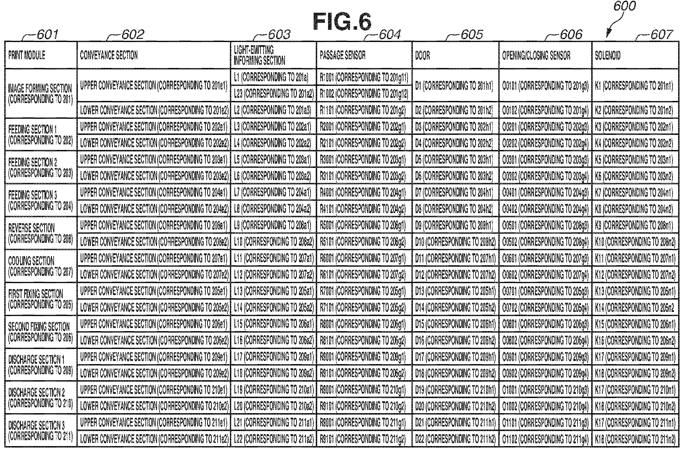

In the present embodiment, a case is illustrated where unique identifiers are assigned to the sub-modules (the doors, the sensors, and the light-emitting informing sections) included in the print modules 201 to 211. In the present embodiment, a case is illustrated where each print module is managed using a management table 600 illustrated in Fig. 6. The management table 600 stores the identifiers of the sub-modules included in the print modules 201 to 211. The management table 600 is stored in a storage medium so that each of the microprocessors (e.g., the microprocessor 201b) of the print modules 201 to 211, the CPU 224, and the CPU 217 of the DFE 103 can access the management table 600. In the present embodiment, a case is illustrated where a sub-module (a sensor, a door, or a light-emitting informing section) regarding which a notification and an instruction are given is specified using the identifier stored in the management table 600.

In Fig. 6, a column 601 stores information for identifying the print modules 201 to 211. In Fig. 6, to facilitate the understanding of the information managed in the management table 600, the column 601 indicates the names of the print modules. The information stored in the column 601, however, is not limited to the names of the print modules. For example, the column 601 may store identifiers assigned to the print modules 201 to 211. Similarly, also a column 602 may store assigned identifiers instead of names.

A column 602 stores information for identifying the conveyance sections (e.g., the conveyance sections 201e1 and 201e2) included in each of the print modules 201 to 211. As described above, in the present embodiment, a case is illustrated where each of the print modules 201 to 211 includes the upper conveyance section (e.g., the conveyance section 201e1) and the lower conveyance section (e.g., the conveyance section 201e2).

A column 603 stores information for identifying the light-emitting informing sections (e.g., the light-emitting informing sections 201a1, 201a2, and 201a3). Fig. 6 illustrates a case where the column 603 stores the identifiers of the light-emitting informing sections. Similarly, also columns 604 to 607 store the identifiers of the sub-modules.

As described above, in the present embodiment, a case is illustrated where each of the print modules 201 to 211 includes the upper light-emitting informing section (e.g., the light-emitting informing sections 201a1, 201a2, and 202a1) and the lower light-emitting informing section (e.g., the light-emitting informing sections 201a2 and 202a2). In the present embodiment, a case is illustrated where the image forming section 201 includes the two light-emitting informing sections 201a1 and 201a2 as upper light-emitting informing sections.

A column 604 stores information for identifying the passage sensors (e.g., the passage sensors 201g11, 201g12, 201g2, 202g1, and 201g2). As described above, in the present embodiment, a case is illustrated where each of the print modules 201 to 211 includes the upper passage sensor (e.g., the passage sensors 201g11, 201g12, and 202g1) and the lower passage sensor (e.g., the passage sensor 201g2). In the present embodiment, a case is illustrated where the image forming section 201 includes the two passage sensors 201g11 and 201g12 as upper passage sensors.

A column 605 stores information for identifying the doors (e.g., the doors 201h1 and 201h2). As described above, in the present embodiment, a case is illustrated where each of the print modules 201 to 211 includes the upper door (e.g., the door 201h1) and the lower door (e.g., the door 201h2). If the upper door (e.g., the door 201h1) opens, the user can access the upper conveyance section (e.g., the conveyance section 201e1) (perform work on the upper conveyance section). If the lower door (e.g., the door 201h2) opens, the user can access the lower conveyance section (e.g., the conveyance section 201e2) (perform work on the lower conveyance section).

A column 606 stores information for identifying the opening/closing sensors (e.g., the opening/closing sensors 201g3 and 201g4). As described above, in the present embodiment, a case is illustrated where in each of the print modules 201 to 211, the upper door (e.g., the door 201h1) is equipped with the upper opening/closing sensor (e.g., the opening/closing sensor 201g3). In the present embodiment, a case is illustrated where in each of the print modules 201 to 211, the lower door (e.g., the door 201h2) is equipped with the lower opening/closing sensor (e.g., the opening/closing sensor 201g4).

A column 607 stores information for identifying the door solenoids (e.g., the door solenoids 201n1 and 201n2). As described above, in the present embodiment, a case is illustrated where the upper door (e.g., the door 201h1) is equipped with the upper door solenoid (e.g., the door solenoid 201n1). In the present embodiment, a case is illustrated where the lower door (e.g., the door 201h2) is equipped with the lower door solenoid (e.g., the door solenoid 201n2).

An example of reference to the management table 600 is as follows. A case is illustrated where a door unlocking instruction indicating the release of the lock on a door is given. In this case, the CPU 224 refers to the management table 600 and determines a print module as the transmission destination of the door unlocking instruction based on the identifier of the door specified by the door unlocking instruction. The CPU 224 searches the column 605 for data that matches the identifier of the door specified by the door unlocking instruction, and refers to the column 601 corresponding to found data, thereby determining a print module as the transmission destination of the door unlocking instruction. As described above, in the present embodiment, a case is illustrated where a notification and an instruction exchanged between the print modules 201 to 211, the CPU 224, and the DFE 103 include an identifier managed in the management table 600. The print modules 201 to 211, the CPU 224, and the DFE 103 having received a notification and an instruction refer to the management table 600 and thereby can identify a target (a sensor, a door, a print module, and a door solenoid) of the notification and the instruction.

In the present embodiment, a case is illustrated where a notification and an instruction are assigned an identifier unique to the contents of the notification and the instruction. In this case, for example, when the notification and the instruction are transmitted, the notification and the instruction may include an identifier according to the types of the notification and the instruction. The print modules 201 to 211, the CPU 224, and the DFE 103 having received the notification and the instruction determine the types of the notification and the instruction based on the identifier according to the types of the notification and the instruction.

The processing of the flowchart in Fig. 5 is processing equivalent among the print modules 201 to 211. Accordingly, as the processing in the flowchart in Fig. 5, the processing of the image forming section 201 is illustrated.

In step S501, based on the result of detecting a sheet by the upper passage sensor 201g11 or 201g12 or the lower passage sensor 201g2, the microprocessor 201b determines whether a sheet is jammed. For example, if the passage sensor 201g11, 201g12, or 201g2 continues to detect a sheet for a predetermined time or more, the microprocessor 201b determines that a sheet is jammed. As a result of this determination, if a sheet is jammed (Yes in step S501), the process of step S502 is performed. If, on the other hand, a sheet is not jammed (No in step S501), the process of step S505 is performed.

In step S502, the microprocessor 201b determines whether the identifier of the passage sensor 201g11, 201g12, or 201g2 that has detected the jam of the sheet is already stored as a passage sensor that has detected a jam of a sheet in the RAM 201d. As a result of this determination, if the identifier of the passage sensor that has detected the jam of the sheet is already stored (Yes in step S502), the processing of the flowchart in Fig. 5 ends. If, on the other hand, the identifier of the passage sensor that has detected the jam of the sheet is not already stored (No in step S502), the process of step S503 is performed.

In step S503, the microprocessor 201b stores the identifier of the passage sensor that has detected the jam of the sheet as a passage sensor that has detected a jam of a sheet in the RAM 201d.

Next, in step S504, the microprocessor 201b transmits a sheet jam notification to the CPU 224. The microprocessor 201b includes the identifier of the passage sensor stored in step S504 in the sheet jam notification. If the process of step S504 is completed, the processing of the flowchart in Fig. 5 ends.

As described above, if it is determined in step S501 that a sheet is not jammed (No in step S501), the process of step S505 is performed. In step S505, the microprocessor 201b determines whether the upper opening/closing sensor 201g3 or the lower opening/closing sensor 201g4 detects the opening of the door 201h1 or 201h2. As a result of this determination, if the opening of the door 201h1 or 201h2 is detected (Yes in step S505), the process of step S506 is performed.

In step S506, the microprocessor 201b transmits a door opening notification to the CPU 224. The microprocessor 201b includes the identifier of the opening/closing sensor that has detected the opening of the door in the door opening notification. If the process of step S506 is completed, the processing of the flowchart in Fig. 5 ends.

As a result of the determination in step S505, if the opening of the door 201h1 or 201h2 is not detected (No in step S505), the process of step S507 is performed. In step S507, the microprocessor 201b determines whether the upper opening/closing sensor 201g3 or the lower opening/closing sensor 201g4 detects the closing of the door 201h1 or 201h2. As a result of this determination, if the closing of the door 201h1 or 201h2 is not detected (No in step S507), the processing of the flowchart in Fig. 5 ends. If, on the other hand, the closing of the door 201h1 or 201h2 is detected (Yes in step S507), the process of step S508 is performed.

In step S508, the microprocessor 201b transmits a door closing notification to the CPU 224. The microprocessor 201b includes the identifier of the door opening/closing sensor that has detected the closing of the door in the door closing notification.

Next, in step S509, the microprocessor 201b activates a passage sensor present at a position accessible from the door where the opening/closing sensor that has detected the closing of the door is installed. For example, if the upper opening/closing sensor 201g3 detects the closing of the door 201h1, the microprocessor 201b activates the upper passage sensors 201g11 and 201g12. If the lower opening/closing sensor 201g4 detects the closing of the door 201h2, the microprocessor 201b activates the lower passage sensor 201g2.

Next, in step S510, the microprocessor 201b determines whether there is a passage sensor that has not detected a jam of a sheet among passage sensors stored as a passage sensor that has detected a jam of a sheet in the RAM 201d. As a result of this determination, if there is not a passage sensor that has not detected a jam of a sheet (No in step S510), the processing of the flowchart in Fig. 5 ends. If, on the other hand, there is a passage sensor that has not detected a jam of a sheet (Yes in step S510), the process of step S511 is performed.

In step S511, the microprocessor 201b transmits a sheet jam clearance notification to the CPU 224. The microprocessor 201b includes the identifier of the passage sensor that has not detected a jam of a sheet in the sheet jam clearance notification. The microprocessor 201b deletes the identifier of the passage sensor that has not detected a jam of a sheet and is stored as a passage sensor that has detected a jam of a sheet in the RAM 201d. If the process of step S511 is completed, the processing of the flowchart in Fig. 5 ends.

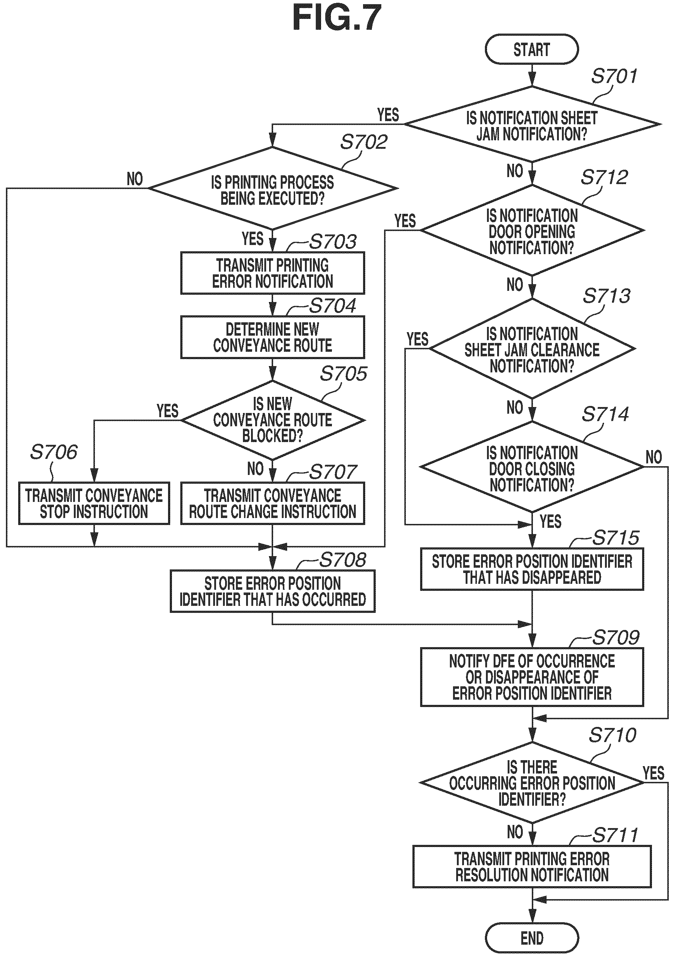

Fig. 7 is a flowchart illustrating an example of the flow of the processing of the CPU 224 in a case where the CPU 224 receives notifications from the print modules 201 to 211. The processing of the flowchart in Fig. 7 starts, for example, if the CPU 224 receives a notification from any of the print modules 201 to 211.

In step S701, the CPU 224 determines whether the notification received from any of the print modules 201 to 211 is a sheet jam notification. As a result of this determination, if the notification received from any of the print modules 201 to 211 is not a sheet jam notification (No in step S701), the process of step S712 is performed. If, on the other hand, the notification received from any of the print modules 201 to 211 is a sheet jam notification (Yes in step S701), the process of step S702 is performed.

In step S702, the CPU 224 determines whether a printing process is being executed. The printing process is a series of processes related to printing from the start of the feeding of a sheet to the completion of the discharge of the sheet. As a result of this determination, if the printing process is not being executed (No in step S702), the processes of steps S703 to S707 are skipped, and the process of step S708 is performed. If, on the other hand, the printing process is being executed (Yes in step S702), the process of step S703 is performed.

In step S703, the CPU 224 transmits a printing error notification to the DFE 103 via the network I/F 225. The CPU 224 includes the identifier of an image printed on a jammed sheet or the identifier of an image to be printed on the jammed sheet in the printing error notification.

Next, in step S704, the CPU 224 determines a new conveyance route as the conveyance route of a sheet that becomes unable to be discharged to the stacking portion 209i to which the sheet is originally to be discharged. The CPU 224 transmits a conveyance route change instruction to the print modules 201 to 211. For example, the CPU 224 determines the escape tray 2021 or 208i or the sample tray 209j located closest to the current position of the sheet as the target as a new discharge destination and determines a route from the current position to the new discharge destination as a new conveyance route.

The CPU 224 includes a unique identifier defined for the conveyance route and the identifier of the sheet in the conveyance route change instruction.

Next, in step S705, the CPU 224 determines whether the new conveyance route is blocked by the jammed sheet. As a result of this determination, if the new conveyance route is blocked (Yes in step S705), the process of step S706 is performed. If, on the other hand, the new conveyance route is not blocked (No in step S705), the process of step S707 is performed.

In step S706, the CPU 224 transmits a conveyance stop instruction to the print modules 201 to 211. The CPU 224 includes the identifier of the sheet of which the conveyance is to be stopped as information for identifying the sheet in the conveyance stop instruction. If the process of step S706 is completed, the process of step S708 is performed.

If it is determined in step S705 that the new conveyance route is not blocked (No in step S705), the process of step S707 is performed. In step S707, the CPU 224 transmits a conveyance route change instruction to the print modules 201 to 211. The CPU 224 includes unique identifiers defined for conveyance routes and the identifier of the sheet of which the conveyance route is to be changed in the conveyance route change instruction. If the process of step S707 is completed, the process of step S708 is performed.

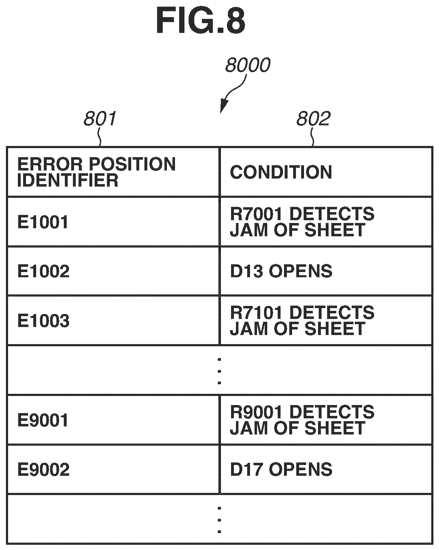

In step S708, the CPU 224 identifies an error position identifier that has occurred based on the notification received from any of the print modules 201 to 211, and stores the error position identifier in the RAM 229. In the present embodiment, a case is illustrated where an occurrence condition for an error position identifier is defined in an error position identifier management table 800 illustrated in Fig. 8.

Fig. 8 is a diagram illustrating an example of the error position identifier management table 800. For example, the error position identifier management table 800 is stored in the SSD 230 so that the CPU 224 can access the error position identifier management table 800. For example, the error position identifier management table 800 is read into the RAM 229 by the CPU 224.

A column 801 stores an error position identifier.

A column 802 stores a condition for the error position identifier stored in the column 801 to enter an occurrence state. The error position identifier occurs when the condition stored in the column 802 is satisfied. The error position identifier disappears when the condition ceases to be satisfied.

An example of reference to the error position identifier management table 800 is as follows. A case is illustrated where the CPU 224 receives a sheet jam notification including an identifier R7001 of the upper passage sensor 205g1 from the first fixing section 205. In this case, in step S708, the CPU 224 refers to the error position identifier management table 800, thereby identifying the occurrence of an error position identifier E1001 and storing the error position identifier E1001.

The description returns to Fig. 7. If the process of step S708 is completed, the process of step S709 is performed. In step S709, the CPU 224 notifies the DFE 103 of the occurrence or the disappearance of an error position identifier. The CPU 224 includes an error position identifier that has occurred or disappeared in the notification. If there is an error position identifier that has occurred, the CPU 224 stores the error position identifier that has occurred as an occurring error position identifier in the RAM 229. If there is an error position identifier that has disappeared, the CPU 224 removes the error position identifier that has disappeared from occurring error position identifiers stored in the RAM 229.

Next, in step S710, the CPU 224 determines whether there is an error position identifier stored as an occurring error position identifier. As a result of this determination, if there is an error position identifier stored as an occurring error position identifier (Yes in step S710), the processing of the flowchart in Fig. 7 ends. If, on the other hand, there is not an error position identifier stored as an occurring error position identifier (No in step S710), the process of step S711 is performed.

In step S711, the CPU 224 transmits a printing error resolution notification to the DFE 103 via the network I/F 225. If the process of step S711 is completed, the processing of the flowchart in Fig. 7 ends.

As described above, if it is determined in step S701 that the notification received from any of the print modules 201 to 211 is not a sheet jam notification (No in step S701), the process of step S712 is performed.

In step S712, the CPU 224 determines whether the notification received from any of the print modules 201 to 211 is a door opening notification. As a result of this determination, if the notification received from any of the print modules 201 to 211 is a door opening notification (Yes in step S712), the process of step S708 is performed. If, on the other hand, the notification received from any of the print modules 201 to 211 is not a door opening notification (No in step S712), the process of step S713 is performed.

In step S713, the CPU 224 determines whether the notification received from any of the print modules 201 to 211 is a sheet jam clearance notification. As a result of this determination, if the notification received from any of the print modules 201 to 211 is a sheet jam clearance notification (Yes in step S713), the process of step S714 is skipped, and the process of step S715 is performed. If, on the other hand, the notification received from any of the print modules 201 to 211 is not a sheet jam clearance notification (No in step S713), the process of step S714 is performed.

In step S714, the CPU 224 determines whether the notification received from any of the print modules 201 to 211 is a door closing notification. As a result of this determination, if the notification received from any of the print modules 201 to 211 is not a door closing notification (No in step S714), the process of step S710 is performed. If, on the other hand, the notification received from any of the print modules 201 to 211 is a door closing notification (Yes in step S714), the process of step S715 is performed.

In step S715, the CPU 224 identifies an error position identifier that has disappeared based on the notification received from any of the print modules 201 to 211, and stores the error position identifier in the RAM 229. In the present embodiment, a case is illustrated where the CPU 224 refers to the error position identifier management table 800 to identify the error position identifier that has disappeared. For example, suppose that in step S708, the CPU 224 refers to the error position identifier management table 800, identifies the occurrence of the error position identifier E1001, and stores the error position identifier E1001. Suppose that then, in step S701, the CPU 224 receives a sheet jam clearance notification including the identifier R7001 of the upper passage sensor 205g1 from the first fixing section 205. In this case, in step S715, the CPU 224 refers to the error position identifier management table 800, identifies the error position identifier E1001 that has disappeared, and stores the error position identifier E1001. If the process of step S715 is completed, the process of step S709 is performed.

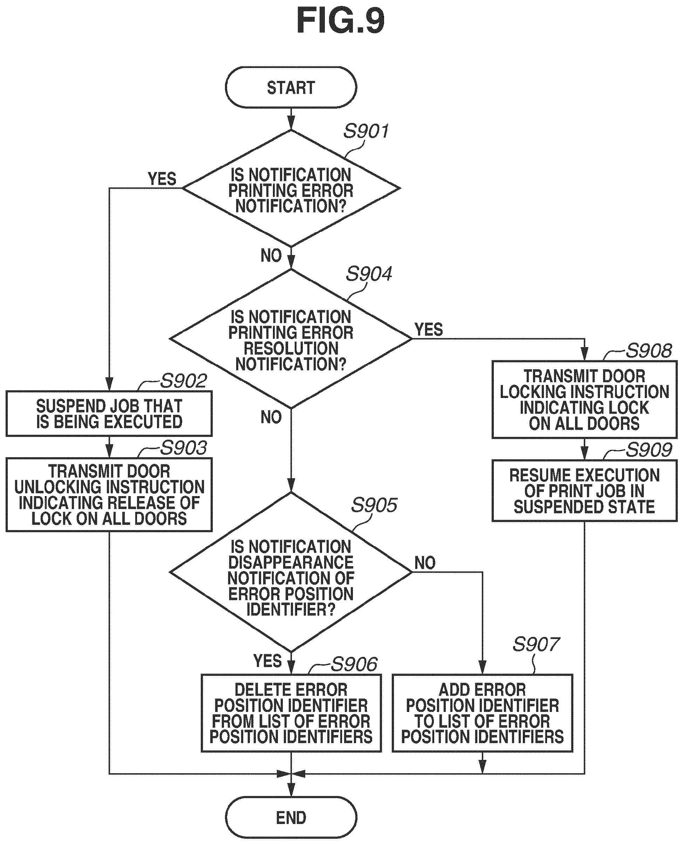

Fig. 9 is a flowchart illustrating an example of the flow of the processing of the DFE 103 in a case where the DFE 103 receives a notification from the image forming apparatus 101 (the CPU 224). The processing of the flowchart in Fig. 9 starts, for example, if the CPU 217 of the DFE 103 detects the reception of a notification from the image forming apparatus 101.

In step S901, the CPU 217 determines whether the notification received from the image forming apparatus 101 is a printing error notification. As a result of this determination, if the notification received from the image forming apparatus 101 is not a printing error notification (No in step S901), the process of step S904 is performed. If, on the other hand, the notification received from the image forming apparatus 101 is a printing error notification (Yes in step S901), the process of step S902 is performed.

In step S902, the CPU 217 suspends the printing of a job that is being executed. The CPU 217 stores the identifier of an image of which the CPU 217 is notified by the printing error notification as a resumption position when the printing starts, in the RAM 220.

Next, in step S903, the CPU 217 transmits a door unlocking instruction indicating the release of the lock on all the doors (e.g., the doors 201h1 and 201h2) to the CPU 224 of the image forming apparatus 101 via the network I/F 218. If the process of step S903 is completed, the processing of the flowchart in Fig. 9 ends.

As described above, if it is determined in step S901 that the notification received from the image forming apparatus 101 is not a printing error notification (No in step S901), the process of step S904 is performed. In step S904, the CPU 217 determines whether the notification received from the image forming apparatus 101 is a printing error resolution notification. As a result of this determination, if the notification received from the image forming apparatus 101 is a printing error resolution notification (Yes in step S904), the process of step S908 is performed. If, on the other hand, the notification received from the image forming apparatus 101 is not a printing error resolution notification (No in step S904), the process of step S905 is performed.

In step S905, the CPU 217 determines whether the notification received from the image forming apparatus 101 is a disappearance notification of an error position identifier. As a result of this determination, if the notification received from the image forming apparatus 101 is a disappearance notification of an error position identifier (Yes in step S905), the process of step S906 is performed. In step S906, the CPU 217 deletes the error position identifier of which the disappearance notification is received from a list of error position identifiers, and issues an internal notification of an update of the list of error position identifiers. If the process of step S906 is completed, the processing of the flowchart in Fig. 9 ends.

As a result of the determination in step S905, if the notification received from the image forming apparatus 101 is not a disappearance notification of an error position identifier (No in step S905), the process of step S907 is performed. In step S907, the CPU 217 adds an error position identifier of which an occurrence notification is received to the list of error position identifiers, and issues an internal notification of an update of the list of error position identifiers. If the process of step S907 is completed, the processing of the flowchart in Fig. 9 ends.

As described above, if it is determined in step S904 that the notification received from the image forming apparatus 101 is a printing error resolution notification (Yes in step S904), the process of step S908 is performed. In step S908, the CPU 217 transmits a door locking instruction indicating the lock on all the doors (e.g., the doors 201h1 and 201h2) to the CPU 224 of the image forming apparatus 101 via the network I/F 218.

Next, in step S909, the CPU 217 resumes the execution of the print job in the suspended state.

The CPU 217 resumes the execution of the print job from the resumption position stored in step S902. If the process of step S909 is completed, the processing of the flowchart in Fig. 9 ends.

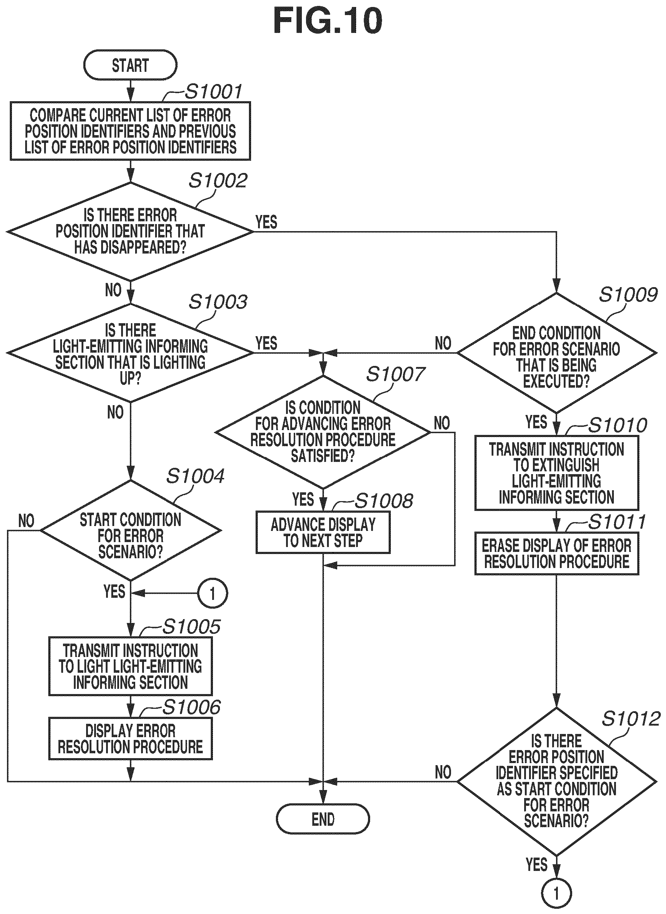

Fig. 10 is a flowchart illustrating an example of the flow of the processing of the DFE 103 in a case where the DFE 103 receives an internal notification of an update of the list of error position identifiers. The processing of the flowchart in Fig. 10 starts, for example, if the CPU 217 of the DFE 103 detects an internal notification of an update of the list of error position identifiers.

In step S1001, the CPU 217 compares the current list of error position identifiers and the list of error position identifiers in the previous execution of the processing of the flowchart in Fig. 10. In the following description, the list of error position identifiers in the previous execution of the processing of the flowchart in Fig. 10 is referred to as "the previous list of error position identifiers", where necessary.

Next, in step S1002, the CPU 217 determines whether there is an error position identifier that has disappeared from the previous list of error position identifiers in the current list of error position identifiers. As a result of this determination, if there is an error position identifier that has disappeared from the previous list of error position identifiers in the current list of error position identifiers (Yes in step S1002), the process of step S1009 is performed. If, on the other hand, there is not an error position identifier that has disappeared from the previous list of error position identifiers in the current list of error position identifiers (No in step S1002), the process of step S1003 is performed. In a case where the process of step S1003 is performed, an error position identifier that is not in the previous list of error position identifiers is added to the current list of error position identifiers.

In step S1003, the CPU 217 determines whether there is a light-emitting informing section that is currently lighting up among the light-emitting informing sections 201a1 to 211a1, 201a2 to 211a2, and 201a3 to 204a3. The technique for determining whether there is a light-emitting informing section that is lighting up is not limited.

For example, the determination of whether there is a light-emitting informing section that is lighting up may be made by storing the content of a lighting instruction transmitted in step S1005. The CPU 217 may transmit an instruction to transmit the light emission states of the light-emitting informing sections 201a1 to 211a1, 201a2 to 211a2, and 201a3 to 204a3 to the image forming apparatus 101 (the CPU 224) via the network I/F 218. In this case, the CPU 217 may acquire the light emission states of the light-emitting informing sections 201al to 211al, 201a2 to 211a2, and 201a3 to 204a3 from the image forming apparatus 101, thereby determining whether there is a light-emitting informing section that is lighting up.

As a result of this determination, if there is a light-emitting informing section that is currently lighting up among the light-emitting informing sections 201al to 211al, 201a2 to 211a2, and 201a3 to 204a3 (Yes in step S1003), the process of step S1007 is performed. If, on the other hand, there is not a light-emitting informing section that is currently lighting up among the light-emitting informing sections 201al to 211al, 201a2 to 211a2, and 201a3 to 204a3 (No in step S1003), the process of step S1004 is performed.

In step S1004, the CPU 217 determines whether the addition of the error position identifier added to the current list of error position identifiers to the list of error position identifiers is a start condition for any of error scenarios. The error position identifier added to the current list of error position identifiers is identified based on the results of the processes of steps S1001 and S1002. As a result of this determination, if the addition of the error position identifier added to the current list of error position identifiers to the list of error position identifiers is not the start condition for any of the error scenarios (No in step S1004), the processing of the flowchart in Fig. 10 ends.

If, on the other hand, the addition of the error position identifier added to the current list of error position identifiers to the list of error position identifiers is the start condition for any of the error scenarios (Yes in step S1004), the process of step S1005 is performed. In step S1005, the CPU 217 starts an error scenario that is applicable according to the determination in step S1004 or S1009. The CPU 217 transmits an instruction to light a light-emitting informing section specified in an at-time-of-start process for the error scenario in a color specified in the at-time-of-start process for the error scenario to the image forming apparatus 101 (the CPU 224) via the network I/F 218.

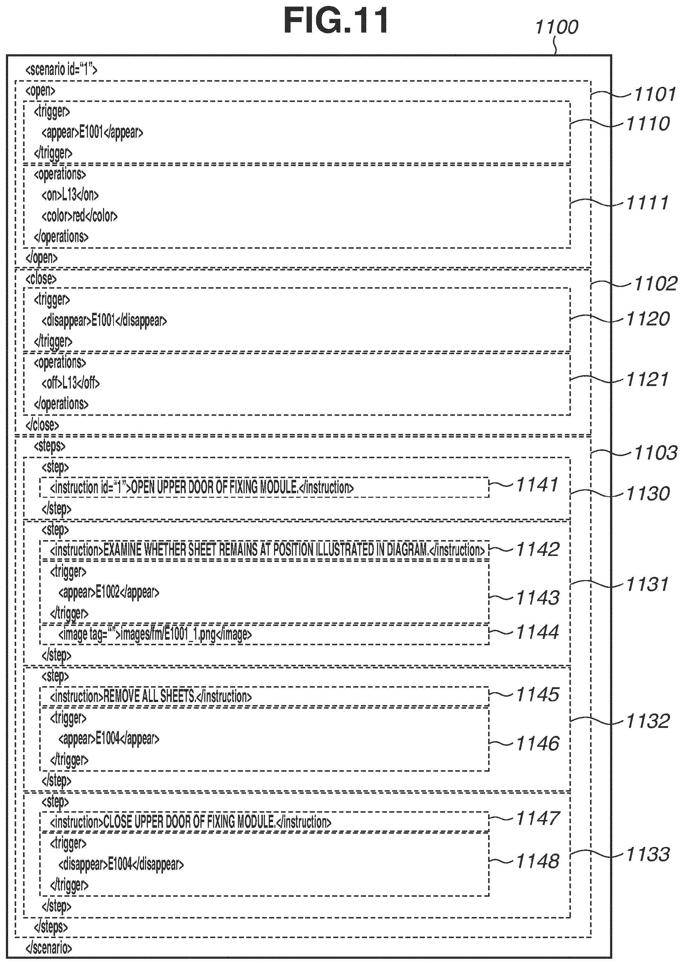

With reference to Fig. 11, an example of the at-time-of-start process for the error scenario is described. Fig. 11 is a diagram illustrating an example of an error scenario definition 1100 that defines the error scenario. The error scenario definition 1100 is defined with respect to each error. For example, the error scenario definition 1100 is stored as a file in the SSD 221. The CPU 217 of the DFE 103 analyzes the error scenario definition 1100, thereby determining the start and the end of the error scenario and updating display on the display device 104.

Fig. 11 illustrates a case where an error scenario start definition portion 1101 includes an error scenario start condition portion 1110 and an error scenario at-time-of-start process portion 1111.

In the error scenario start condition portion 1110, the start condition for the error scenario is specified (described). Fig. 11 illustrates a case where the occurrence of the error position identifier E1001 is specified as the start condition for the error scenario. In this case, if the processing of the flowchart in Fig. 10 starts by the addition of the error position identifier E1001 to the list of error position identifiers, then in step S1004, the determination of the CPU 217 is Yes. That is, in step S1004, the CPU 217 determines that the addition of the error position identifier added to the current list of error position identifiers to the list of error position identifiers is the start condition for any of the error scenarios.

In the error scenario at-time-of-start process portion 1111, a process to be executed when the error scenario is started is specified (described). Fig. 11 illustrates a case where the lighting in red of the light-emitting informing section 205a1 of which the identifier is L13 is specified. In this case, in step S1005, the CPU 217 transmits an instruction to light the light-emitting informing section 205a1 in red to the image forming apparatus 101 (the CPU 224) via the network I/F 218.

The description returns to Fig. 10. If the process of step S1005 is completed, the process of step S1006 is performed. In step S1006, the CPU 217 displays an error resolution procedure on the display device 104. If the process of step S1006 is completed, the processing of the flowchart in Fig. 10 ends. The process of step S1005 and the process of step S1006 may be executed approximately simultaneously. After the process of step S1006, the process of step S1005 may be performed.

As described above, if it is determined in step S 1003 that there is a light-emitting informing section that is currently lighting up among the light-emitting informing sections 201al to 211al, 201a2 to 211a2, and 201a3 to 204a3 (Yes in step S1003), the process of step S1007 is performed. In step S1007, the CPU 217 determines whether a condition for advancing an error resolution procedure regarding an error scenario that is being executed to the next step is satisfied. Specifically, the CPU 217 determines whether the addition of the error position identifier added to the current list of error position identifiers to the list of error position identifiers is the condition for advancing the error resolution procedure regarding the error scenario that is being executed. The CPU 217 determines whether the disappearance of an error position identifier that has disappeared from the previous list of error position identifiers in the current list of error position identifiers from the list of error position identifiers is the condition for advancing the error resolution procedure regarding the error scenario that is being executed.

As a result of this determination, if the condition for advancing the error resolution procedure regarding the error scenario that is being executed to the next step is not satisfied (No in step S1007), the processing of the flowchart in Fig. 10 ends. If, on the other hand, the condition for advancing the error resolution procedure regarding the error scenario that is being executed to the next step is satisfied (Yes in step S1007), the process of step S1008 is performed. In step S1008, the CPU 217 advances the error resolution procedure regarding the error scenario that is being executed to the next step, and updates the display of the error resolution procedure on the display device 104.

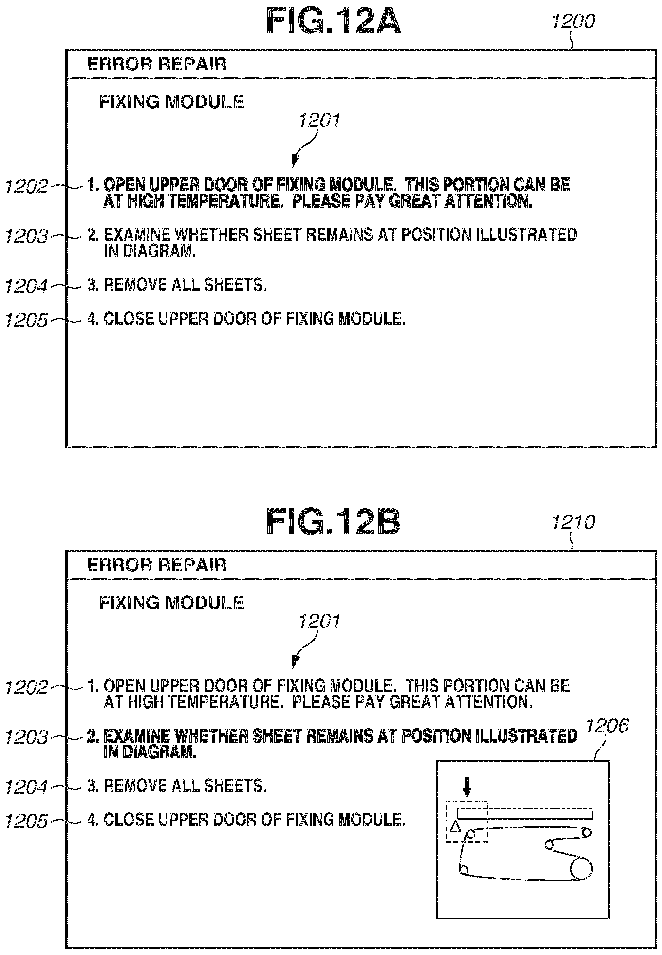

With reference to Figs. 11, 12A, and 12B, descriptions are given of an example of the error resolution procedure and an example of the display of the error resolution procedure.

In Fig. 11, in an error scenario resolution work procedure specifying portion 1103, a resolution work procedure to be displayed on the display device 104 during the execution of the error scenario is specified (described). Fig. 11 illustrates a case where the error scenario resolution work procedure specifying portion 1103 includes resolution work procedure step specifying portions 1130 to 1133. The number of resolution work procedure step specifying portions only needs to be one or more.

In the resolution work procedure step specifying portions 1130 to 1133, work steps for resolving the error are specified. Fig. 11 illustrates a case where the resolution work procedure step specifying portions 1130 to 1133 include step instruction specifying portions 1141, 1142, 1145, and 1147 and step start condition specifying portions 1143, 1146, and 1148. As illustrated in the resolution work procedure step specifying portion 1131, the resolution work procedure step specifying portion 1131 may include a step display image specifying portion 1144. In the step display image specifying portion 1144, an image to be displayed with the error resolution procedure is specified.

The resolution work procedure step specifying portion 1130 for step 1 does not include a step start condition specifying portion. Thus, the work step specified in the resolution work procedure step specifying portion 1130 starts simultaneously with the start of the error scenario. The resolution work procedure step specifying portion 1131 for step 2 includes the step start condition specifying portion 1143. Fig. 11 illustrates a case where in the step start condition specifying portion 1143, the occurrence of an error position identifier E1002 is specified as the start condition for the error scenario. Suppose that the processing of the flowchart in Fig. 10 starts by the addition of the error position identifier E1002 to the list of error position identifiers during the execution of step 1. In this case, in step S1007, the CPU 217 determines that the condition for advancing the error resolution procedure regarding the error scenario that is being executed to the next step is satisfied.

Figs. 12A and 12B are diagrams illustrating examples of resolution work procedure screens 1200 and 1210. The resolution work procedure screens 1200 and 1210 are examples of the display of the error resolution procedure. In the present embodiment, a case is illustrated where the resolution work procedure screens 1200 and 1210 are displayed on the display device 104.

Fig. 12A is a diagram illustrating an example of the resolution work procedure screen 1200 displayed when the error resolution procedure occurs (in step 1). Fig. 12B is a diagram illustrating an example of the resolution work procedure screen 1210 displayed when the error resolution procedure proceeds to the next work step (in step 2).

In Figs. 12A and 12B, a work instruction display portion 1201 is a region for displaying the error resolution procedure specified in the error scenario resolution work procedure specifying portion 1103 of the error scenario definition 1100. The work instruction display portion 1201 includes step display portions 1202 to 1205. The step display portions 1202 to 1205 display the contents of the error resolution procedure specified in the step instruction specifying portions 1141, 1142, 1145, and 1147, respectively.

Fig. 12A illustrates a case where the error resolution procedure specified in the step instruction specifying portion 1141 of the resolution work procedure step specifying portion 1130 for step 1 is highlighted in the step display portion 1202. Fig. 12B illustrates a case where the error resolution procedure specified in the step instruction specifying portion 1142 of the resolution work procedure step specifying portion 1131 for step 2 is highlighted in the step display portion 1203. As described above, in the present embodiment, a case is illustrated where the display of the error resolution procedure is changed according to the progress status of the error resolution procedure.

For example, in step S1006, the CPU 224 displays the resolution work procedure screen 1200 illustrated in Fig. 12A on the display device 104. For example, if the condition specified in the step start condition specifying portion 1143 of the resolution work procedure step specifying portion 1131 for step 2 is satisfied, then in step S1008, the CPU 224 displays the resolution work procedure screen 1210 illustrated in Fig. 12B on the display device 104. As described above, the error resolution procedure is highlighted in the step display portion 1203. As described above, the resolution work procedure step specifying portion 1131 for step 2 includes the step display image specifying portion 1144. Thus, the CPU 217 displays the image specified in the step display image specifying portion 1144 in an image display portion 1206 of the resolution work procedure screen 1210 illustrated in Fig. 12B.

The description returns to Fig. 10. As described above, as a result of the determination in step S1002, if there is an error position identifier that has disappeared from the previous list of error position identifiers in the current list of error position identifiers (Yes in step S1002), the process of step S1009 is performed. In step S1009, the CPU 217 determines whether the disappearance of the error position identifier that has disappeared from the previous list of error position identifiers is an end condition for an error scenario that is being executed. The error position identifier that has disappeared from the list of error position identifiers is identified based on the results of the processes of steps S1001 and S1002. As a result of this determination, if the disappearance of the error position identifier that has disappeared from the previous list of error position identifiers is not the end condition for the error scenario that is being executed (No in step S1009), the process of step S1007 is performed.

If, on the other hand, the disappearance of the error position identifier that has disappeared from the previous list of error position identifiers is the end condition for the error scenario that is being executed (Yes in step S1009), the process of step S1010 is performed. In step S1010, the CPU 217 ends the error scenario that is being executed, and transmits an instruction to extinguish a light-emitting informing section specified in an at-time-of-end process for the error scenario to the image forming apparatus 101 (the CPU 224) via the network I/F 218.

Next, in step S1011, the CPU 217 erases the display of the error resolution procedure on the display device 104. The process of step S1010 and the process of step S1011 may be executed approximately simultaneously. After the process of step S1011, the process of step S1010 may be performed.

Next, in step S1012, the CPU 217 determines whether there is an error position identifier specified as the start condition for an error scenario in the list of error position identifiers. As a result of this determination, if there is not an error position identifier specified as the start condition for an error scenario in the list of error position identifiers (No in step S1012), the processing of the flowchart in Fig. 10 ends. If, on the other hand, there is an error position identifier specified as the start condition for an error scenario in the list of error position identifiers (Yes in step S1012), the process of step S1005 is performed.

For example, in step S1012, in order from an error position identifier at the beginning of the list of error position identifiers (i.e., an error position identifier added first), the CPU 217 determines whether the error position identifier is specified as the start condition for an error scenario. If an error position identifier specified as the start condition for an error scenario is not found (No in step S1012), the processing of the flowchart in Fig. 10 ends. If, on the other hand, an error position identifier specified as the start condition for an error scenario is found (Yes in step S1012), the process of step S1005 is executed.

With reference to Fig. 11, an example of the at-time-of-end process for the error scenario is described.

Fig. 11 illustrates a case where an error scenario end definition portion 1102 includes an error scenario end condition portion 1120 and an error scenario at-time-of-end process portion 1121.

In the error scenario end condition portion 1120, the end condition for the error scenario is specified (described). Fig. 11 illustrates a case where the disappearance of the error position identifier E1001 is specified as the end condition for the error scenario. In this case, if the processing of the flowchart in Fig. 10 starts by the disappearance of the error position identifier E1001 from the list of error position identifiers, then in step S1009, the determination of the CPU 217 is Yes. That is, the CPU 217 determines that the disappearance of the error position identifier that has disappeared from the previous list of error position identifiers is the end condition for the error scenario that is being executed.

In the error scenario at-time-of-end process portion 1121, a process to be executed when the error scenario is ended is specified (described). Fig. 11 illustrates a case where the extinction of the light-emitting informing section 205a1 of which the identifier is L13 is specified. In this case, in step S1011, the CPU 217 transmits an instruction to extinguish the light-emitting informing section 205a1 of which the identifier is L13 to the image forming apparatus 101 (the CPU 224) via the network I/F 218.

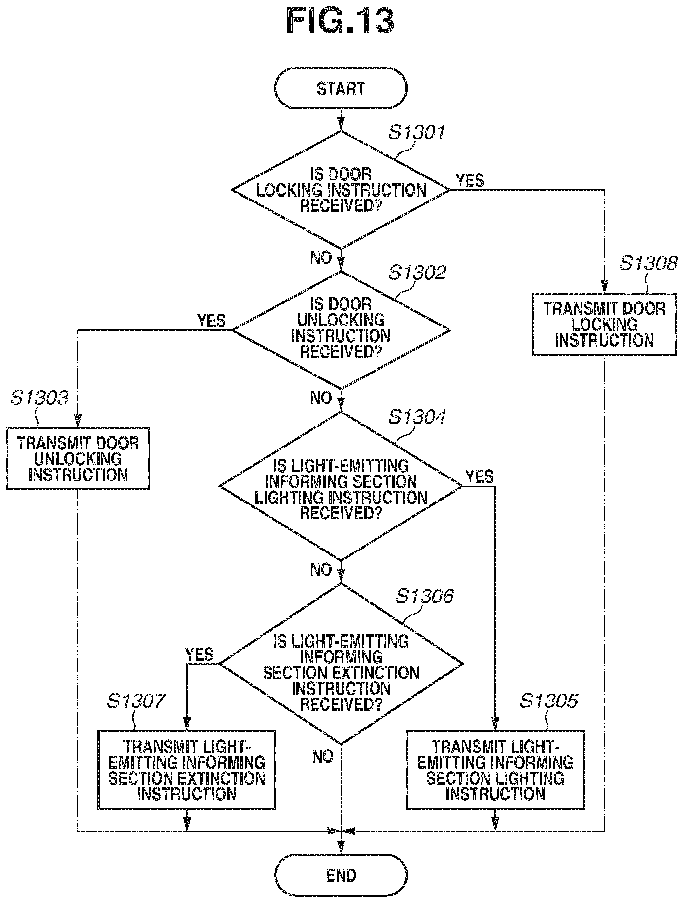

Fig. 13 is a flowchart illustrating an example of the flow of the processing of the image forming apparatus 101 in a case where the image forming apparatus 101 receives an instruction from the DFE 103. The processing of the flowchart in Fig. 13 starts, for example, if the CPU 224 of the image forming apparatus 101 detects the reception of an instruction from the DFE 103.

In step S1301, the CPU 224 determines whether the instruction received from the DFE 103 is a door locking instruction. As a result of this determination, if the instruction received from the DFE 103 is a door locking instruction (Yes in step S1301), the process of step S1308 is performed. If, on the other hand, the instruction received from the DFE 103 is not a door locking instruction (No in step S1301), the process of step S1302 is performed.

In step S1302, the CPU 224 determines whether the instruction received from the DFE 103 is a door unlocking instruction. As a result of this determination, if the instruction received from the DFE 103 is not a door unlocking instruction (No in step S1302), the process of step S1304 is performed. If, on the other hand, the instruction received from the DFE 103 is a door unlocking instruction (Yes in step S1302), the process of step S1303 is performed.

In step S1303, the CPU 224 transmits the door unlocking instruction to a print module including a door specified by the door unlocking instruction. If the process of step S1303 is completed, the processing of the flowchart in Fig. 13 ends.

In step S1304, the CPU 224 determines whether the instruction received from the DFE 103 is a light-emitting informing section lighting instruction. As a result of this determination, if the instruction received from the DFE 103 is a light-emitting informing section lighting instruction (Yes in step S1304), the process of step S1305 is performed. If, on the other hand, the instruction received from the DFE 103 is not a light-emitting informing section lighting instruction (No in step S1304), the process of step S1306 is performed.

In step S1305, the CPU 224 transmits the light-emitting informing section lighting instruction to a print module including a light-emitting informing section specified by the light-emitting informing section lighting instruction. If the process of step S1305 is completed, the processing of the flowchart in Fig. 13 ends.

In step S1306, the CPU 224 determines whether the instruction received from the DFE 103 is a light-emitting informing section extinction instruction. As a result of this determination, if the instruction received from the DFE 103 is not a light-emitting informing section extinction instruction (No in step S1306), the processing of the flowchart in Fig. 13 ends. If, on the other hand, the instruction received from the DFE 103 is a light-emitting informing section extinction instruction (Yes in step S1306), the process of step S1307 is performed.

In step S1307, the CPU 224 transmits the light-emitting informing section extinction instruction to a print module including a light-emitting informing section specified by the light-emitting informing section extinction instruction. If the process of step S1307 is completed, the processing of the flowchart in Fig. 13 ends.

As described above, if it is determined in step S1301 that the instruction received from the DFE 103 is a door locking instruction (Yes in step S1301), the process of step S1308 is performed. In step S1308, the CPU 224 transmits the door locking instruction to a print module including a door specified by the door locking instruction. If the process of step S1308 is completed, the processing of the flowchart in Fig. 13 ends.

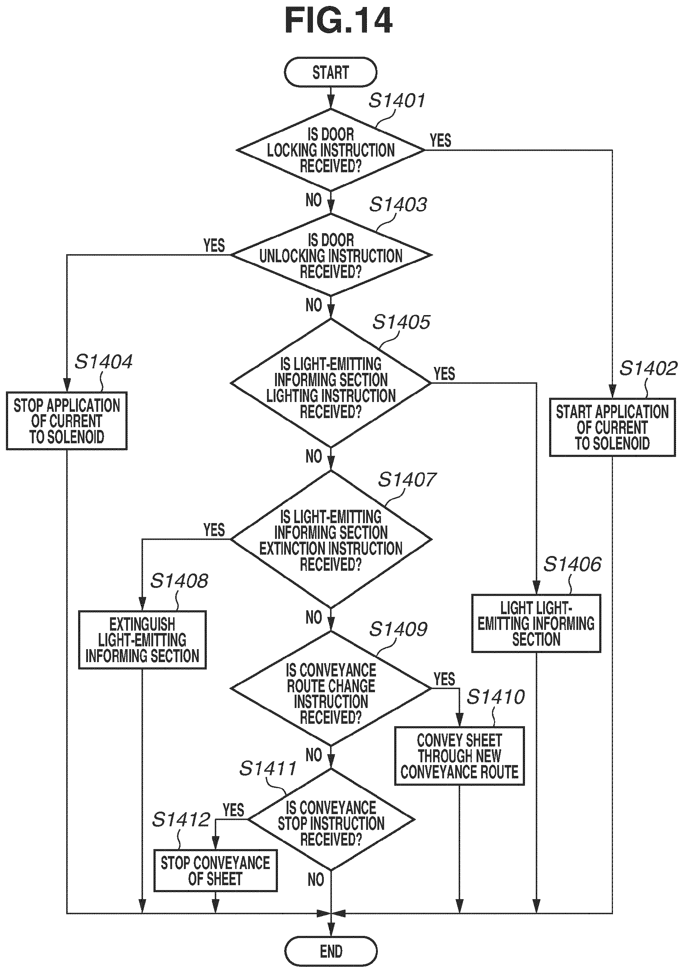

Fig. 14 is a flowchart illustrating an example of the flow of the processing of each of the print modules 201 to 211 in a case where the print module receives an instruction from the CPU 224. The processing of the flowchart in Fig. 14 starts, for example, if any of the print modules 201 to 211 receives an instruction from the CPU 224. The processing of the flowchart in Fig. 14 is equivalent among the print modules 201 to 211. Accordingly, as the processing in the flowchart in Fig. 14, the processing of the image forming section 201 is illustrated.

In step S1401, the microprocessor 201b determines whether the instruction received from the CPU 224 is a door locking instruction. As a result of this determination, if the instruction received from the CPU 224 is a door locking instruction (Yes in step S1401), the process of step S1402 is performed. If, on the other hand, the instruction received from the CPU 224 is not a door locking instruction (No in step S1401), the process of step S1403 is performed.

In step S1402, the microprocessor 201b starts the application of a current to a door solenoid corresponding to a door specified by the door locking instruction received from the CPU 224. For example, if the door specified by the door locking instruction is the upper door 201h1 of which the identifier is D1, the CPU 224 starts the application of a current to the upper door solenoid 201n1 of which the identifier is K1 (see Fig. 6). For example, if the door specified by the door locking instruction is the lower door 201h2 of which the identifier is D2, the CPU 224 starts the application of a current to the lower door solenoid 201n2 of which the identifier is K2 (see Fig. 6). As described above, if a current flows through the solenoid coil included in the door solenoid, an electromagnetic force is generated, and the iron core is attracted by the electromagnetic force, whereby the door is locked. If the process of step S1402 is completed, the processing of the flowchart in Fig. 14 ends.

As described above, if it is determined that the instruction received from the CPU 224 in step S1401 is not a door locking instruction (No in step S1401), the process of step S1403 is performed. In step S1403, the microprocessor 201b determines whether the instruction received from the CPU 224 is a door unlocking instruction. As a result of this determination, if the instruction received from the CPU 224 is a door unlocking instruction (Yes in step S1403), the process of step S1404 is performed. If, on the other hand, the instruction received from the CPU 224 is not a door unlocking instruction (No in step S1403), the process of step S1405 is performed.

In step S1404, the microprocessor 201b stops the application of a current to a door solenoid corresponding to a door specified by the door unlocking instruction received from the CPU 224. As described above, if the application of a current to the solenoid coil included in the door solenoid stops, an electromagnetic force generated by the door solenoid stops. Thus, the iron core returns to the original position. Thus, the lock on the door by the door solenoid is released. If the process of step S1404 is completed, the processing of the flowchart in Fig. 14 ends.

As described above, if it is determined in step S 1403 that the instruction received from the CPU 224 is not a door unlocking instruction (No in step S1403), the process of step S1405 is performed. In step S1405, the microprocessor 201b determines whether the instruction received from the CPU 224 is a light-emitting informing section lighting instruction. As a result of this determination, if the instruction received from the CPU 224 is a light-emitting informing section lighting instruction (Yes in step S1405), the process of step S1406 is performed. If, on the other hand, the instruction received from the CPU 224 is not a light-emitting informing section lighting instruction (No in step S1405), the process of step S1407 is performed.

In step S1406, the microprocessor 201b lights a light-emitting informing section specified by the light-emitting informing section lighting instruction in a color specified by the light-emitting informing section lighting instruction. For example, if L1 is specified as the identifier of the light-emitting informing section and red is specified as the color of the lighting of the light-emitting informing section by the light-emitting informing section lighting instruction, the microprocessor 201b lights the light-emitting informing section 201a1 in red. For example, if L23 is specified as the identifier of the light-emitting informing section and red is specified as the color of the lighting of the light-emitting informing section by the light-emitting informing section lighting instruction, the microprocessor 201b lights the light-emitting informing section 201a2 in red. For example, if L2 is specified as the identifier of the light-emitting informing section and red is specified as the color of the lighting of the light-emitting informing section by the light-emitting informing section lighting instruction, the microprocessor 201b lights the light-emitting informing section 201a3 in red. If the process of step S1406 is completed, the processing of the flowchart in Fig. 14 ends.

As described above, if it is determined in step S1405 that the instruction received from the CPU 224 is not a light-emitting informing section lighting instruction (No in step S1405), the process of step S1407 is performed. In step S1407, the microprocessor 201b determines whether the instruction received from the CPU 224 is a light-emitting informing section extinction instruction. As a result of this determination, if the instruction received from the CPU 224 is a the light-emitting informing section extinction instruction (Yes in step S1407), the process of step S1408 is performed. If, on the other hand, the instruction received from the CPU 224 is not a light-emitting informing section extinction instruction (No in step S1407), the process of step S1409 is performed.

In step S1408, the microprocessor 201b extinguishes a light-emitting informing section specified by the light-emitting informing section extinction instruction. If the process of step S1408 is completed, the processing of the flowchart in Fig. 14 ends.

As described above, if it is determined step S1407 that the instruction received from the CPU 224 is not a light-emitting informing section extinction instruction (No in step S1407), the process of step S1409 is performed. In step S1409, the microprocessor 201b determines whether the instruction received from the CPU 224 is a conveyance route change instruction. As a result of this determination, if the instruction received from the CPU 224 is a conveyance route change instruction (Yes in step S1409), the process of step S1410 is performed. If, on the other hand, the instruction received from the CPU 224 is not a conveyance route change instruction (No in step S1409), the process of step S1411 is performed.

In step S1410, the microprocessor 201b sets the conveyance route of a sheet indicated by the conveyance route change instruction as a new conveyance route and instructs a conveyance section corresponding to the new conveyance route between the conveyance sections 201e1 and 201e2 to convey the sheet. If the process of step S1410 is completed, the processing of the flowchart in Fig. 14 ends.

As described above, if it is determined in step S 1409 that the instruction received from the CPU 224 is not a conveyance route change instruction (No in step S1409), the process of step S1411 is performed. In step S1411, the microprocessor 201b determines whether the instruction received from the CPU 224 is a conveyance stop instruction. As a result of this determination, if the instruction received from the CPU 224 is not a conveyance stop instruction (No in step S1411), the processing of the flowchart in Fig. 14 ends. If, on the other hand, the instruction received from the CPU 224 is a conveyance stop instruction (Yes in step S1411), the process of step S1412 is performed.

In step S1412, the microprocessor 201b instructs a conveyance section that is conveying a sheet between the conveyance sections 201e1 and 201e2 to stop the conveyance of the sheet as instructed by the conveyance stop instruction. In this case, the passage sensor 201g11 or 201g2 detects a jam of the sheet of which the conveyance is stopped. If the sheet as the printing target has not yet entered the image forming section 201, the microprocessor 201b cancels the wait for the acceptance of the sheet (prevents the sheet from being conveyed into the image forming section 201). If the sheet is already delivered to the first fixing section 205 as a downstream print module, the microprocessor 201b does not perform the processing, and the process of step S1412 ends. If the process of step S1412 is completed, the processing of the flowchart in Fig. 14 ends.

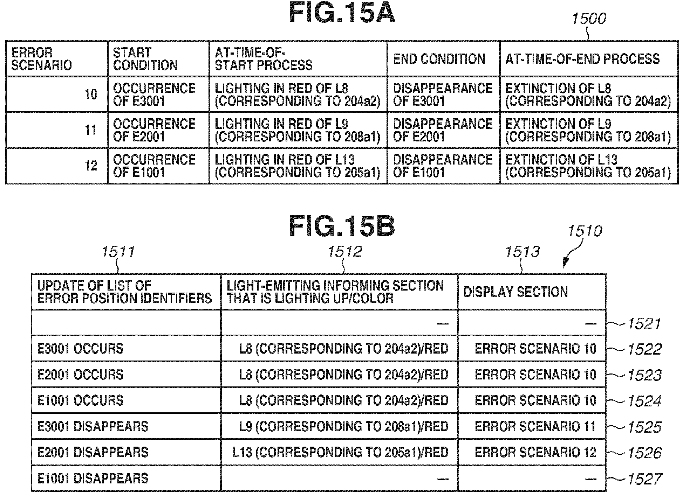

Figs. 15A and 15B are diagrams illustrating examples of the lighting states of the light-emitting informing sections 201al to 211al, 201a2 to 211a2, and 201a3 to 204a3 and examples of the display contents of the display device 104. With reference to Figs. 15A and 15B, descriptions are given of an example of the lighting state of a light-emitting informing section and an example of the display content of the display device 104 after the processing of the flowchart in Fig. 10 is executed by the occurrence of an update of an error position identifier. A case is illustrated where three error position identifiers E3001, E2001, and E1001 occur in this order, and the error position identifiers E3001, E2001, and E1001 disappear by the user performing error resolution procedures. A case is illustrated where the error scenario definition 1100 defines the start conditions, the at-time-of-start processes, the ending conditions, and the at-time-of-end processes for three error scenarios of which the identifiers are 10, 11, and 12 as in an error scenario outline 1500 illustrated in Fig. 15A. In the present embodiment, a case is illustrated where the occurrence condition for an error position identifier is defined in the error position identifier management table 800.

A correspondence table 1510 illustrated in Fig. 15B illustrates examples of the correspondence relationships between the lighting states of the light-emitting informing sections 201al to 211al, 201a2 to 211a2, and 201a3 to 204a3 and the display contents of the display device 104. A column 1511 stores the update content of the list of error position identifiers. A case is illustrated where processing according to the update content indicated in the column 1511 is executed according to the flowchart in Fig. 10. A column 1512 stores the identifier of a light-emitting informing section that is lighting up immediately after the execution of the processing, and the color of the lighting of the light-emitting informing section. A column 1513 stores the identifier of an error scenario corresponding to an error resolution procedure displayed on the display device 104. A case is illustrated where in the correspondence table 1510, the lighting states of the light-emitting informing sections 201a1 to 211a1, 201a2 to 211a2, and 201a3 to 204a3 and the display contents of the display device 104 transition in order from the top row. If the processing of the flowchart in Fig. 10 is performed once, information corresponding to a single row of the correspondence table 1510 (information stored in each of the columns 1511 to 1513) is obtained. Hereinafter, the information corresponding to a single row of the correspondence table 1510 is referred to as "states 1521 to 1527".

In the first state 1521, an update of an error position identifier, a light-emitting informing section that is lighting up, and display on the display device 104 are not present. In this case, the processing of the flowchart in Fig. 10 is not performed.

The next state 1522 is a state after the occurrence of the error position identifier E3001. In this case, in the processing of the flowchart in Fig. 10, the determination is Noin step S1002, and the process of step S1003 is performed. At the time when the first state 1521 ends, there is not a light-emitting informing section that is lighting up. Thus, also at the time when the process of step S1003 is performed, there is not a light-emitting informing section that is lighting up. Thus, the determination is No in step S1003, and the process of step S1004 is performed. According to the error scenario outline 1500 illustrated in Fig. 15A, the occurrence of the error position identifier E3001 is the start condition for the error scenario 10. Thus, the determination is Yes in step S1004, and the process of step S1005 is performed. According to the error scenario outline 1500 illustrated in Fig. 15A, the at-time-of-start process for the error scenario 10 is the lighting in red of the light-emitting informing section 204a2 of which the identifier is L8. Thus, in step S1005, the CPU 217 transmits an instruction to light in red the light-emitting informing section 204a2 of which the identifier is L8 to the image forming apparatus 101 (the CPU 224) via the network I/F 218. In step S1006, the CPU 217 displays an error resolution procedure regarding the error scenario 10 on the display device 104. The processing of the flowchart in Fig. 10 ends.

In the states 1523 and 1524 after the occurrence of the error position identifiers E2001 and E1001, respectively, illustrated in Fig. 15B, the determination is Yes in step S1003, and the process of step S1007 is performed. According to the error scenario outline 1500 illustrated in Fig. 15A, the occurrence of each of the error position identifiers E2001 and E1001 is not the start condition for the next step of the error scenario that is being executed. Thus, the determination is No in step S1007, and the processing of the flowchart in Fig. 10 ends.

In the state 1525 after the disappearance of the error position identifier E3001 illustrated in Fig. 15B, the determination is Yes in step S1002, and the process of step S1009 is performed. According to the error scenario outline 1500 illustrated in Fig. 15A, the disappearance of the error position identifier E3001 is the end condition for the error scenario 10. Thus, the determination is Yes in step S1009, and the process of step S1010 is performed. According to the error scenario outline 1500 illustrated in Fig. 15A, the at-time-of-end process for the error scenario 10 is the extinction of the light-emitting informing section 204a2 of which the identifier is L8. Thus, in step S1010, the CPU 217 transmits an instruction to extinguish the light-emitting informing section 204a2 of which the identifier is L8 to the image forming apparatus 101 (the CPU 224) via the network I/F 218.

In step S1011, the CPU 217 erases the display of the error resolution procedure regarding the error scenario 10. At this time, the error position identifiers E2001 and E1001 are present in the list of error position identifiers. Thus, first, the CPU 217 determines whether the error position identifier E2001 is the start condition for an error scenario. According to the error scenario outline 1500 illustrated in Fig. 15A, the occurrence of the error position identifier E2001 is the start condition for the error scenario 11. Thus, the determination is Yes in step S1012, and the process of step S1005 is performed. According to the error scenario outline 1500 illustrated in Fig. 15A, the at-time-of-start process for the error scenario 11 is the lighting in red of the light-emitting informing section 208a1 of which the identifier is L9. Thus, in step S1005, the CPU 217 transmits an instruction to light in red the light-emitting informing section 208a1 of which the identifier is L9 to the image forming apparatus 101 (the CPU 224) via the network I/F 218. In step S1006, the CPU 217 displays an error resolution procedure regarding the error scenario 11 on the display device 104. The processing of the flowchart in Fig. 10 ends.

Also in the state 1526 after the disappearance of the error position identifier E2001, the processing of the flowchart in Fig. 10 proceeds similarly to the case of the state 1525 after the disappearance of the error position identifier E3001. In this case, in step S1010, the CPU 217 transmits an instruction to extinguish the light-emitting informing section 208a1 of which the identifier is L9 to the image forming apparatus 101 (the CPU 224) via the network I/F 218. In step S1011, the CPU 217 erases the display of the error resolution procedure regarding the error scenario 11. At this time, the error position identifier E1001 is present in the list of error position identifiers. Thus, the CPU 217 determines whether the error position identifier E1001 is the start condition for an error scenario. According to the error scenario outline 1500 illustrated in Fig. 15A, the occurrence of the error position identifier E1001 is the start condition for the error scenario 12. Thus, the determination is Yes in step S1012, and the process of step S1005 is performed. According to the error scenario outline 1500 illustrated in Fig. 15A, the at-time-of-start process for the error scenario 12 is the lighting in red of the light-emitting informing section 205a1 of which the identifier is L13. Thus, in step S1005, the CPU 217 transmits an instruction to light in red the light-emitting informing section 205a1 of which the identifier is L13 to the image forming apparatus 101 (the CPU 224) via the network I/F 218. In step S1006, the CPU 217 displays an error resolution procedure regarding the error scenario 12 on the display device 104. The processing of the flowchart in Fig. 10 ends.

Also in the state 1527 after the disappearance of the error position identifier E1001, the processing of the flowchart in Fig. 10 proceeds similarly to the cases of the states 1525 and 1526 after the disappearance of the error position identifiers E3001 and E2001, respectively. In this case, in step S1010, the CPU 217 transmits an instruction to extinguish the light-emitting informing section 205a1 of which the identifier is L13 to the image forming apparatus 101 (the CPU 224) via the network I/F 218. In step S1011, the CPU 217 erases the display of the error resolution procedure regarding the error scenario 12. At this time, an error position identifier is not present in the list of error position identifiers. Thus, the determination is No in step S1012, and the processing of the flowchart in Fig. 10 ends.

As described above, in the present embodiment, based on the detection result of a passage sensor (e.g., the passage sensors 201g11, 201g12, and 201g2), the image forming system emits light from a light-emitting informing section (e.g., the light-emitting informing sections 201al to 201a3) and displays the resolution work procedure screen 1200 on the display device 104.

For example, if a jam of a sheet occurs in the exit portion of the conveyance section 201e1, the image forming apparatus 101 lights the light-emitting informing section 201a1 in a predetermined light emission form (e.g., in red). For example, if a jam of a sheet occurs in the entrance portion of the head portion 201i of the conveyance section 201e1, the image forming apparatus 101 lights the light-emitting informing section 201a2 in a predetermined light emission form (e.g., in red). If a jam of a sheet occurs in the conveyance section 201e2, the image forming apparatus 101 lights the light-emitting informing section 201a3 in a predetermined light emission form (e.g., in red). When the image forming apparatus 101 lights a light-emitting informing section (e.g., the light-emitting informing sections 201a1 to 201a3) as described above, the image forming apparatus 101 displays the resolution work procedure screens 1200 and 1210 indicating an error resolution procedure on the display device 104. In this case, it is desirable that at least parts of the time in which the light-emitting informing section 201a3 lights up and the time in which the resolution work procedure screens 1200 and 1210 are displayed on the display device 104 are to overlap each other. For example, the timing of the start of the lighting of the light-emitting informing section 201a3 and the timing of the start of the display of the resolution work procedure screens 1200 and 1210 on the display device 104 may be approximately the same (in some embodiments, the same) as each other.

Thus, for example, if an error such as a jam of a sheet occurs in a conveyance section (e.g., the conveyance sections 201e1 and 201e2), it is possible to cause the user to quickly grasp the occurrence of the error by the lighting of a light-emitting informing section (e.g., the light-emitting informing sections 201a1 to 201a3) corresponding to the conveyance section. It is possible to cause the user at a place away from the image forming apparatus 101 to grasp the position where an error such as a jam of a sheet occurs. In conjunction with the lighting of a light-emitting informing section, information related to work for resolving an error that has occurred in a conveyance section, such as an error resolution procedure in the conveyance section corresponding to the light-emitting informing section, is displayed, and therefore, it is possible to provide the user with information necessary to perform the work for resolving the error. Thus, for example, it is possible to cause the user to efficiently perform handling according to the state of the image forming apparatus 101. Thus, it is possible to increase the convenience of the image forming apparatus 101.

In the present embodiment, a case is illustrated where an abnormality of the state of the image forming apparatus 101 is a jam of a sheet in a conveyance path of the image forming apparatus 101. A jam of a sheet can occur in the print modules 201 to 211. Thus, in the manner illustrated in the present embodiment, it is possible to cause the user to quickly grasp where a jam of a sheet occurs, which is desirable. However, an abnormality of the state of the image forming apparatus 101 is not limited to a jam of a sheet in a conveyance path of the image forming apparatus 101. For example, an abnormality of the state of the image forming apparatus 101 may be an abnormality of the discharge amounts of droplets from the inkjet heads, or may be an abnormality of the heating amounts of the first fixing section 205 and the second fixing section 206. In the present embodiment, a case is illustrated where as information indicating handling due to an abnormality of the state of the image forming apparatus 101, information including a work procedure to be performed by the user of the image forming apparatus 101 is displayed. However, handling due to an abnormality of the state of the image forming apparatus 101 is not limited to work to be performed by the user of the image forming apparatus 101. For example, handling due to an abnormality of the state of the image forming apparatus 101 may include a request for repair to the manufacturer of the image forming apparatus 101. The state of the image forming apparatus 101 is not limited to an abnormal state. For example, the state of the image forming apparatus 101 may be the state where the image forming apparatus 101 is normal, but a component needs to be replaced (e.g., the state where the remaining amount of ink is small).

Next, a second embodiment is described. In the first embodiment, a case has been illustrated where in conjunction with the lighting of a light-emitting informing section (e.g., the light-emitting informing sections 201a1 to 201a3), the user is informed of error resolution work for resolving an error that has occurred in a conveyance section (e.g., the conveyance sections 201e1 and 201e2) corresponding to the light-emitting informing section. The user, however, does not necessarily confirm display on the display device 104 before performing the error resolution work. For example, the image forming apparatus 101 includes some portions that reach high temperatures when printing is performed. In a case where error resolution work to be performed by the user includes work in these high-temperature portions, it is desirable to certainly cause the user to confirm display on the display device 104 and then cause the user to perform the error resolution work. Accordingly, in the present embodiment, an example of a technique for achieving this process is described. As described above, the present embodiment and the first embodiment are mainly different from each other in a configuration and processing for causing the user to confirm display on the display device 104 and then causing the user to perform error resolution work. Thus, in the description of the present embodiment, portions similar to those in the first embodiment are designated by the same signs as the signs in Figs. 1 to 15, and are not described in detail.

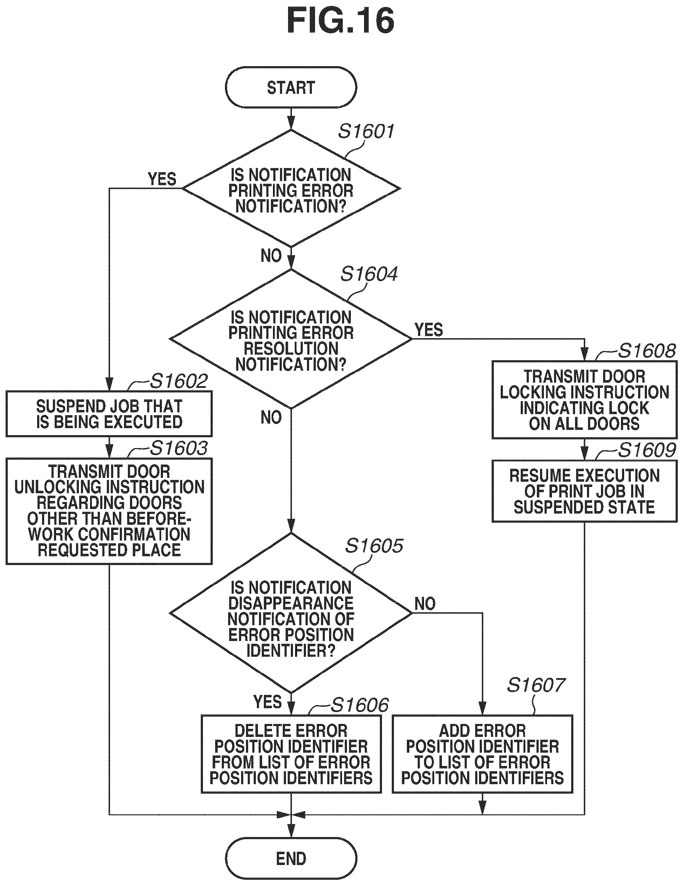

Fig. 16 is a flowchart illustrating an example of the flow of the processing of the DFE 103 in a case where the DFE 103 receives a notification from the image forming apparatus 101 (the CPU 224). The processing of the flowchart in Fig. 16 starts, for example, if the CPU 217 of the DFE 103 detects the reception of a notification from the image forming apparatus 101. Similarly to the first embodiment, also in the present embodiment, a case is illustrated where the type of a notification is determined based on an identifier according to the type of the notification included in the notification.

The processes of steps S1601, S1602, and S1604 to S1609 are similar to the processes of steps S901, S902, and S904 to S909, respectively, in Fig. 9.

In the processing of the flowchart in Fig. 16, after the process of step S1602, the process of step S1603 (instead of step S903) is performed. In step S1603, the CPU 217 transmits a door unlocking instruction indicating the release of the lock on a door for accessing a place other than a before-work confirmation requested place via the network I/F 218. The before-work confirmation requested place is a place where it is necessary to cause the user to confirm display on the display device 104 before error resolution work. The transmission destination of the door unlocking instruction is the image forming apparatus 101 (the CPU 224). For example, the place where it is necessary to cause the user to confirm the display on the display device 104 before the error resolution work is a fixing unit including the first fixing section 205 and the second fixing section 206 that are at high temperatures during printing, or the head portion 201i that greatly influences the print quality. In the present embodiment, a case is illustrated where these three places are before-work confirmation requested places.

In this case, doors for accessing the before-work confirmation requested places are the doors 201h1, 205h1, and 206h1. On the other hand, doors for accessing places other than the before-work confirmation requested places are doors (e.g., the door 201h2) other than the doors 201h1, 205h1, and 206h1. As described in the first embodiment, the door 201h1 is the upper door of the image forming section 201. The door 205h1 is the upper door of the first fixing section 205. The door 206h1 is the upper door of the second fixing section 206. Thus, in step S1603, the CPU 217 transmits a door unlocking instruction regarding the doors other than the three doors 201h1, 205h1, and 206h1. If the process of step S1603 is completed, the processing of the flowchart in Fig. 16 ends.

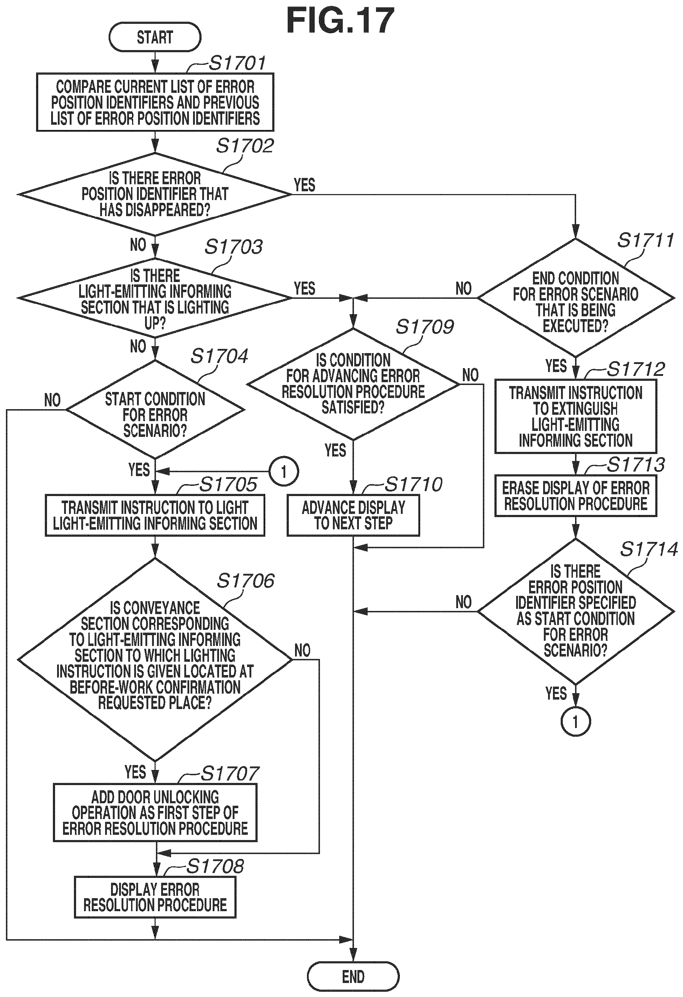

Fig. 17 is a flowchart illustrating an example of the flow of the processing of the DFE 103 in a case where the DFE 103 receives a notification of an update of the list of error position identifiers. The processing of the flowchart in Fig. 17 starts, for example, if the CPU 217 of the DFE 103 detects an internal notification of an update of the list of error position identifiers.

The processes of step S1701 to S1705 and S1708 to S1714 are similar to the processes of steps S1001 to S1005 and S1006 to S1012, respectively, in Fig. 10. However, there is a case where information displayed in step S1708 is different from the information displayed in step S1006.

In the processing of the flowchart in Fig. 17, after the process of step S1705, steps S1706 and S1707 are performed in this order, and after the process of step S1706 or S1707 is performed, the process of step S1708 is performed.

In step S1706, the CPU 217 determines whether a conveyance section corresponding to the light-emitting informing section to which the lighting instruction is given in step S1705 is located at a before-work confirmation requested place. As described above, the before-work confirmation requested place is a place where it is necessary to cause the user to confirm display on the display device 104 before error resolution work. As described above, examples of a door for accessing the before-work confirmation requested place are the doors 201h1, 205h1, and 206h1.

As a result of the determination in step S1706, if the conveyance section corresponding to the light-emitting informing section to which the lighting instruction is given is not located at a before-work confirmation requested place (No in step S1706), the process of step S1707 is skipped, and the process of step S1708 is performed. In step S1708, the CPU 217 displays an error resolution procedure on the display device 104. For example, a resolution work procedure screen including the error resolution procedure displayed in the process of step S1708 in this case is similar to the resolution work procedure screens 1200 and 1210 displayed in the process of step S1006 in Fig. 10. If, on the other hand, the conveyance section corresponding to the light-emitting informing section to which the lighting instruction is given is located at a before-work confirmation requested place (Yes in step S1706), the process of step S1707 is performed.

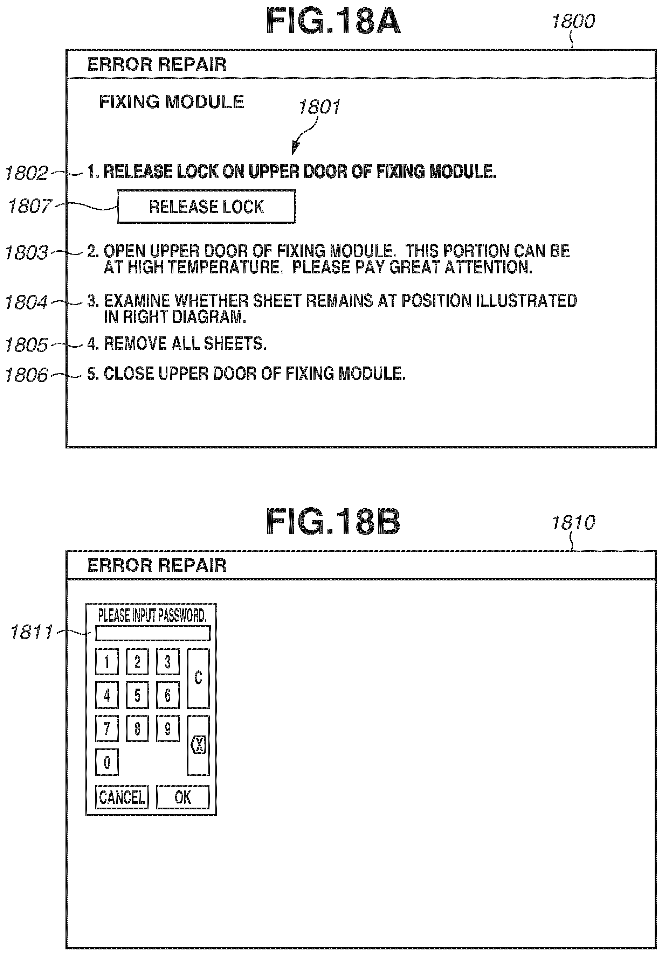

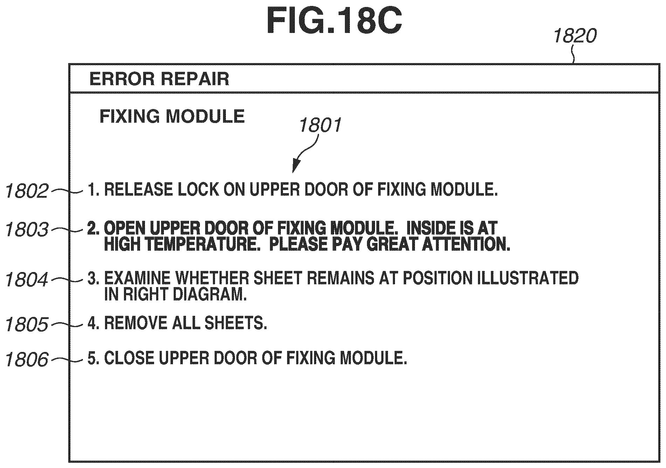

In step S1707, the CPU 217 adds a door unlocking operation as the first step of an error resolution procedure regarding an error scenario that is being executed. The door unlocking operation is an operation for releasing the lock on the door. The door as the target of the unlocking operation added to step 1 in the error resolution procedure regarding the error scenario is identified based on the result of the determination in step S1706. After the process of step S1707 is performed, the process of step S1708 is performed. In step S1708, the CPU 217 displays the error resolution procedure on the display device 104. With reference to Figs. 18A, 18B, and 18C, a description is given of examples of the resolution work procedure screen including the error resolution procedure displayed in the process of step S1708 in this case. Figs. 18A, 18B, and 18C are diagrams illustrating examples of resolution work procedure screens 1800, 1810, and 1820.

Fig. 18A is a diagram illustrating an example of the resolution work procedure screen 1800 displayed when the error resolution procedure occurs. In the error resolution procedure displayed on the resolution work procedure screen 1800 illustrated in Fig. 18A, the door unlocking operation as the first step of the error resolution procedure is added to the error resolution procedure displayed on the resolution work procedure screen 1200 illustrated in Fig. 12A.

Fig. 18B is a diagram illustrating an example of the password input screen 1810 regarding the door unlocking operation. Fig. 18C is a diagram illustrating an example of the resolution work procedure screen 1820 displayed after the door unlocking operation is completed.

In Figs. 18A and 18C, a work instruction display portion 1801 is a region for displaying the error resolution procedure. The work instruction display portion 1801 includes step display portions 1802 to 1806.

The step display portion 1802 displays information indicating that the door unlocking operation is performed as the first work step of the error resolution procedure. Immediately below the step display portion 1802, a lock release button 1807 is displayed. The lock release button 1807 is a button to be pressed by the user to perform the door unlocking operation. A case is illustrated where on the resolution work procedure screen 1800 illustrated in Fig. 18A, the content of the error resolution procedure indicating the door unlocking operation and the lock release button 1807 are highlighted.

The step display portions 1803 to 1806 display contents that are the same as the contents displayed in the step display portions 1202 to 1205, respectively, illustrated in Figs. 12A and 12B. Specifically, the step display portions 1803 to 1806 display the contents of the error resolution procedure specified in the step instruction specifying portions 1141, 1142, 1145, and 1147, respectively. However, due to the addition of the step display portion 1802, the step numbers of the step display portions 1803 to 1806 that display the contents of the work steps subsequent to the door unlocking operation are shifted back one by one relative to the step display portions 1202 to 1205 illustrated in Figs. 12A and 12B.

If the lock release button 1807 is pressed, the CPU 217 displays the password input screen 1810 illustrated in Fig. 18B on the display device 104. The user correctly inputs a password registered in advance by operating a password input operation section 1811 displayed on the password input screen 1810. This completes the door unlocking operation.

Then, the CPU 217 displays the resolution work procedure screen 1820 illustrated in Fig. 18C on the display device 104. A case is illustrated where on the resolution work procedure screen 1820 illustrated in Fig. 18C, the error resolution procedure specified in the step instruction specifying portion 1141 of the resolution work procedure step specifying portion 1130 for step 1 described in the first embodiment is highlighted in the step display portion 1803.

In the present embodiment, a case is illustrated where if the display illustrated in Figs. 18A to 18C is performed in step S1708, the processing of the flowchart in Fig. 17 ends.

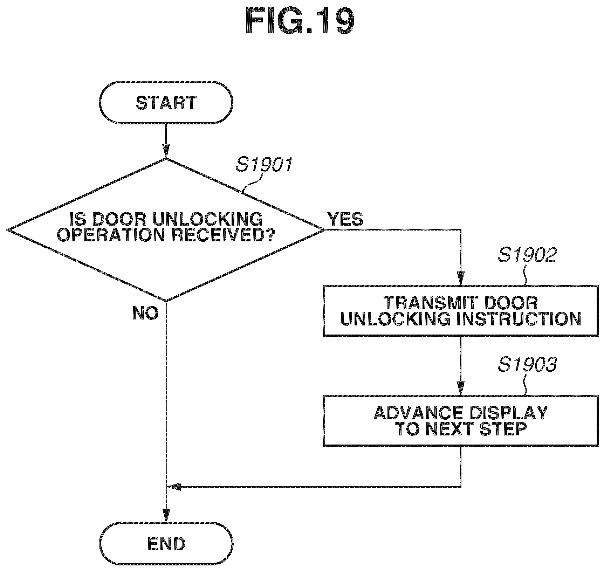

Fig. 19 is a flowchart illustrating an example of the flow of the processing of the DFE 103 in a case where the DFE 103 receives an operation of the user on the resolution work procedure screen 1800 displayed on the display device 104 in step S1708. The processing of the flowchart in Fig. 19 starts, for example, if the CPU 217 of the DFE 103 receives an operation of the user on the resolution work procedure screen 1800.

In step S1901, the CPU 217 determines whether the door unlocking operation is received. The door unlocking operation is work added as the first step of the error resolution procedure regarding the error scenario that is being executed to the error scenario in the process of step S1707. In the present embodiment, a case is illustrated where the pressing of the lock release button 1807 and the correct input of a password registered in advance by operating the password input operation section 1811 are included in the door unlocking operation. In this case, if the lock release button 1807 is pressed, the CPU 217 displays the password input screen 1810 illustrated in Fig. 18B on the display device 104. Then, the CPU 217 determines whether a password input to the password input screen 1810 matches the password registered in advance. In the present embodiment, a case is illustrated where if the password input to the password input screen 1810 matches the password registered in advance, the CPU 217 determines that the door unlocking operation is received. On the other hand, in the present embodiment, a case is illustrated where if the password input to the password input screen 1810 does not match the password registered in advance, the CPU 217 determines that the door unlocking operation is not received.

As a result of the determination in step S1901, if the door unlocking operation is not received (No in step S1901), the processing of the flowchart in Fig. 19 ends. If, on the other hand, the door unlocking operation is received (Yes in step S1901), the process of step S1902 is performed. In step S1902, the CPU 217 transmits a door unlocking instruction regarding a door as a target of the unlocking operation to the image forming apparatus 101 (the CPU 224) via the network I/F 218.

Next, in step S1903, the CPU 217 advances an error resolution procedure regarding an error scenario that is being executed to the next step, and updates the display of the error resolution procedure on the display device 104. For example, the CPU 217 displays the resolution work procedure screen 1820 illustrated in Fig. 18C on the display device 104. If the process of step S1903 is completed, the processing of the flowchart in Fig. 19 ends.

As described above, in the present embodiment, the image forming system restricts error resolution work from being performed until an operation of the user is performed on the display of an error resolution procedure on the display device 104. After the operation is performed, the image forming system lifts the restriction. Thus, in addition to the effects described in the first embodiment, it is possible to prevent the user from performing error resolution work without confirming the content of the error resolution work.

For example, in step S1705, the image forming apparatus 101 lights a light-emitting informing section (e.g., the light-emitting informing sections 201a1 to 201a3), thereby informing the user that an error such as a jam of a sheet has occurred in a conveyance section (e.g., the conveyance sections 201e1 and 201e2). Approximately simultaneously with this informing, in step S1708, the image forming apparatus 101 displays on the display device 104 the resolution work procedure screen 1800 where the door unlocking operation is added. The user becomes aware of the error in the conveyance section according to the informing using the light-emitting informing section, but a door for accessing the conveyance section is locked. Thus, the user cannot start error resolution work.

Before starting the error resolution work, the user necessarily needs to confirm the display on the display device 104 and perform the door unlocking operation. As described above, in the present embodiment, when an error occurs, a light-emitting informing section is lit, thereby quickly informing the user of the occurrence of the error. Additionally, after the user confirms display on the display device 104, the lock on a door is released, thereby causing the user to confirm information regarding work in advance. Thus, for example, before the user performs work on a conveyance section including a high-temperature portion, it is possible to attract the user's attention to the work.

In the present embodiment, a case is illustrated where the door unlocking operation includes the pressing of the lock release button 1807 and the operation of inputting a password. The door unlocking operation, however, is not limited to these operations. For example, the input of a password may not be included in the door unlocking operation. For example, if any operation is performed on the resolution work procedure screen 1800, it can be considered that the user confirms the display content of the resolution work procedure screen 1800. Thus, for example, the door unlocking operation may be any operation on the resolution work procedure screen 1800.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited solely to the disclosed embodiments. The scope of the following claims is to be accorded the broadest interpretation so as to encompass all such modifications and equivalent structures and functions as understood by the skilled person. Each of the embodiments of the present disclosure can be implemented solely or as a combination of a plurality of the embodiments. Each feature or element of each embodiment of the present disclosure can be implemented as a combination of features of elements in a single embodiment. Each modification of one embodiment may be combined with one or more other modifications of the same embodiment. Each modification of one embodiment may be combined with one or more modification of the same embodiment or another embodiment wherein appropriate.

## Claims

1. An image forming system comprising:
a detection section (201g1-209-g4) configured to detect a state of an image forming apparatus (101);
a light-emitting section (201a1 to 211a1, 201a2 to 211a2, and 201a3 to 204a3) provided at a position visible from outside the image forming apparatus;
a display section (104); and
control means (224) configured to control light emission by the light-emitting section and display by the display section based on a result of detecting the state by the detection section,
wherein the light emission by the light-emitting section includes light emission in a form according to the state of the image forming apparatus,
wherein the display by the display section includes display of information indicating handling according to the state of the image forming apparatus, and
wherein after the light emission by the light-emitting section and the display by the display section are performed, and in a case where the handling is performed, the control means ends the light emission and the display and performs a further light emission by a light-emitting section different from the light-emitting section and performs a further display by the display section.

2. The image forming system according to claim 1, wherein based on the result of detecting the state of the image forming apparatus by the detection section, the control means controls light emission by the light-emitting section and display by the display section associated with the detection section.

3. The image forming system according to claim 2, further comprising setting means for setting the light-emitting section corresponding to the detection section.

4. The image forming system according to claim 2,
wherein the image forming system comprises a plurality of the detection sections and a plurality of the light-emitting sections, and
wherein each of the light-emitting sections is associated with at least one of the detection sections.

5. The image forming system according to any preceding claim, wherein at least parts of a time in which the light emission by the light-emitting section is performed and a time in which the display by the display section is performed overlap each other.

6. The image forming system according to any preceding claim, wherein in a case where the state of the image forming apparatus detected by the detection section is abnormal, the control means controls the light emission by the light-emitting section and the display by the display section.

7. The image forming system according to claim 6, further comprising determination means for determining whether the state of the image forming apparatus detected by the detection section is abnormal.

8. The image forming system according to any preceding claim, wherein the state of the image forming apparatus includes a state where in a conveyance path of a sheet on which an image is to be formed based on a print job, the sheet cannot be conveyed.

9. The image forming system according to any preceding claim,
wherein the image forming apparatus includes a plurality of modules, each configured to perform, on a sheet that is being conveyed, some processes in a series of processes from supply of the sheet to discharge of the sheet, and
wherein the detection section detects states of one or more modules among the plurality of modules.

10. The image forming system according to any preceding claim, wherein based on an order of the detection by the detection section, the control means determines an order of performing the light emission by the light-emitting section and the display by the display section.

11. The image forming system according to any preceding claim, wherein the control means changes the display by the display section according to progress of the handling.

12. The image forming system according to any preceding claim, further comprising second control means for changing the state of the image forming apparatus to a state where the handling is restricted until an operation of a user is performed on the display by the display section, and cancelling the state where the handling is restricted after the operation is performed.

13. The image forming system according to claim 12,
wherein the display by the display section includes the display of the information indicating the handling according to the state and display of information for giving an instruction to lift the restriction on the handling, and
wherein after a predetermined operation is performed on the information for giving an instruction to lift the restriction on the handling, the second control means lifts the restriction on the handling.

14. The image forming system according to any one of claims 1 to 13, wherein the light-emitting section is a light-emitting diode (LED).

15. A control method for controlling an image forming system, the control method comprising:
detecting a state of an image forming apparatus; and
based on a result of detecting the state of the image forming apparatus, controlling light emission by a light-emitting section provided at a position visible from outside the image forming apparatus and display by a display section,
wherein the light emission by the light-emitting section includes light emission in a form according to the state of the image forming apparatus,
wherein the display by the display section includes display of information indicating handling according to the state of the image forming apparatus, and
wherein after the light emission by the light-emitting section and the display by the display section are performed, and in a case where the handling is performed, the light emission and the display are ended, and light emission by a light-emitting section different from the light-emitting section and display by the display section are performed.

16. A computer-readable storage medium storing a program for causing a computer to execute a control method for controlling an image forming system, the control method comprising:
detecting a state of an image forming apparatus; and
based on a result of detecting the state of the image forming apparatus, controlling light emission by a light-emitting section provided at a position visible from outside the image forming apparatus and display by a display section,
wherein the light emission by the light-emitting section includes light emission in a form according to the state of the image forming apparatus,
wherein the display by the display section includes display of information indicating handling according to the state of the image forming apparatus, and
wherein after the light emission by the light-emitting section and the display by the display section are performed, and in a case where the handling is performed, the light emission and the display are ended, and light emission by a light-emitting section different from the light-emitting section and display by the display section are performed.
